# EUROPEAN PATENT APPLICATION

(11) **EP 3 145 180 A1**
(43) Date of publication of application: **22.03.2017**
(21) Application number: 16188631.2
(22) Date of filing: 13.09.2016
(51) Int. Cl.: H04N 5/64

(54) **DISPLAY APPARATUS AND APPARATUS FOR CONTROLLING THE SAME**

(30) Priority: 16.09.2015 KR 20150131233
(71) Applicant: Samsung Electronics Co., Ltd., Suwon-si, Gyeonggi-do 16677 (KR)
(72) Inventor: YEO, Song I, Seoul (KR); KIM, In Beom, Gyeonggi-do (KR); JEONG, Jae Hyun, Gyeonggi-do (KR); KIM, Soo Jin, Seoul (KR); KIM, Hyun Ho, Seoul (KR); PARK, Yong June, Gyeonggi-do (KR); CHO, Jae-Seung, Gyeonggi-do (KR)
(74) Representative: Walaski, Jan Filip

(57) **Abstract**

A control apparatus (100) connected to a display apparatus (200) is provided. The control apparatus (100) includes a main board (101) configured to generate a first control signal that controls the display apparatus (200); a light source driver (185) configured to generate a second control signal that drives a light source of the display apparatus (200); a power supply (190) configured to supply power to the display apparatus (200); and a serial transceiver (195) configured to perform a serial communication with the display apparatus (200) and transmit the first control signal, the second control signal, and the power to the display apparatus (200) via the serial communication.

## Description

The present invention relates to a display apparatus and a control apparatus electrically connectable to the display apparatus via wired or wireless communication and configured to control the display apparatus.

Display apparatuses have been developed to have a high resolution and a large scale. In addition, the display apparatuses are in the trend of becoming thinner and lighter

The display apparatus may include a display panel, a main board, a power supply board (e.g., a switching mode power supply), a light source driver board (e.g., a light-emitting diode driver board) and/or a timing controller.

The thickness of the display apparatus is subject to change in proportion to at least one of the thickness of the display panel, the thickness of the main board, the thickness of the power supply board, the thickness of the light source driver board and the thickness of the timing controller.

The thickness of the display apparatus may be reduced when at least one of the thickness of the main board, the thickness of the power supply board, the thickness of the light source driver board and the thickness of the timing controller is reduced.

According to an aspect of an exemplary embodiment, there is provided a control apparatus connected to a display apparatus. The control apparatus may include a main board configured to generate a first control signal that controls the display apparatus; a light source driver configured to generate a second control signal that drives a light source of the display apparatus; a power supply configured to supply power to the display apparatus; and a serial transceiver configured to perform a serial communication with the display apparatus and transmit the first control signal, the second control signal, and the power to the display apparatus via the serial communication.

The control apparatus may further include a speaker configured to output an audio signal.

The serial transceiver may be further configured to convert parallel data of the control apparatus into serial data and transmit the converted serial data to the display apparatus.

The control apparatus may further include a woofer configured to output an audio signal.

Intervals between each of the main board, the light source driver, the power supply and the woofer may be different from each other.

The control apparatus may have a shape of a hexahedron, a cylinder, a sphere or a polyprism.

The woofer may be exposed outside the control apparatus.

The power supply may be disposed between the main board and the light source driver, and an interval between the power supply and the main board may have a greatest interval among intervals between each of the main board, the light source driver, the power supply and the woofer.

The control apparatus may further include a port configured to receive a broadcasting signal and contents, and disposed on a rear surface of the control apparatus to be exposed outside the control apparatus.

The control apparatus may be provided separately from the display apparatus. The control apparatus may be connected to the display apparatus by a single cable.

The main board, the light source driver, the power supply and the serial transceiver may be accommodated in a single case of the control apparatus.

According to an aspect of another exemplary embodiment, there is provided a display apparatus including a bottom chassis; a light source positioned on the bottom chassis; a reflective sheet that is positioned on the light source and reflects light radiated from the light source; a diffusion plate that diffuses the light radiated from the light source; an optical sheet positioned on the diffusion plate; a holder that supports the reflective sheet and the optical sheet; a display panel configured to display an image; a frame that supports the display panel; a top chassis coupled to the bottom chassis; a circuit board configured to transmit a driving signal that drives the display panel based on a control signal; and a serial transceiver configured to receive power and the control signal from a control apparatus provided separately from the display apparatus.

The serial transceiver may convert serial data received from the control apparatus into parallel data.

The display apparatus may further include a light receiver configured to receive light including the control signal.

The display apparatus may further include a speaker.

The speaker may be positioned at a lower bezel area of the top chassis.

The display apparatus may be connected to the control apparatus by a single cable.

According to an aspect of another exemplary embodiment, there is provided a display apparatus including: a bottom chassis that includes a front surface and a rear surface; a front chassis engaged with the bottom chassis; a display panel disposed between the front chassis and the bottom chassis and configured to display an image; a source driver disposed on the rear surface of the bottom chassis and configured to driver the display panel based on a control signal; and a serial transceiver disposed on the rear surface of the bottom chassis, configured to receive the control signal and power from an external controller connected to the serial transceiver, and configured to transmit the received control signal and power to the source driver.

The display apparatus may further include a light source disposed on the front surface of the bottom chassis and configured to radiate light towards the display panel.

As is apparent from the above, a control apparatus connected to a display apparatus having a slim thickness and configured to control the display apparatus can be provided.

A control apparatus including a main board, a power supply, and a light source driver, connected to a display apparatus having a slim thickness, and configured to control the display apparatus can be provided.

A control apparatus including a main board, a power supply, a woofer, and a light source driver, connected to a display apparatus having a slim thickness, and configured to control the display apparatus can be provided.

A control apparatus including a main board, a power supply, and a light source driver, connected to a display apparatus having a slim thickness through a single cable, and configured to control the display apparatus can be provided.

A control apparatus including a main board, a power supply, a woofer, and a light source driver, connected to a display apparatus having a slim thickness through a single cable, and configured to control the display apparatus can be provided.

A display apparatus having a slim thickness and electrically connectable to an external control apparatus can be provided.

The above and/or other aspects will be more apparent by describing certain exemplary embodiments, with reference to the accompanying drawings, in which:
FIG. 1A is a front-side perspective view schematically illustrating a display apparatus and a control apparatus in accordance with an exemplary embodiment;
FIG. 1B is a rear-side perspective view schematically illustrating a display apparatus and a control apparatus in accordance with an exemplary embodiment;
FIG. 2A is a block diagram schematically illustrating a display apparatus and a control apparatus in accordance with an exemplary embodiment;
FIG. 2B is a block diagram illustrating a display apparatus and a control apparatus in accordance with an exemplary embodiment;
FIG. 3A is a block diagram illustrating a display apparatus and a control apparatus in accordance with another exemplary embodiment;
FIG. 3B is a block diagram illustrating a display apparatus and a control apparatus in accordance with another exemplary embodiment;
FIG. 4A is an exploded perspective view schematically illustrating a display apparatus in accordance with an exemplary embodiment;
FIG. 4B is an exploded perspective view schematically illustrating a display apparatus in accordance with another exemplary embodiment;
FIG. 5A is an inside perspective view schematically illustrating a control apparatus in accordance with an exemplary embodiment;
FIG. 5B is an inside perspective view schematically illustrating a control apparatus in accordance with another exemplary embodiment;
FIG. 6A is a perspective view schematically illustrating a control apparatus in accordance with another exemplary embodiment;
FIG. 6B is an inside perspective view schematically illustrating a control apparatus in accordance with another exemplary embodiment;
FIG. 7A is a perspective view schematically illustrating a control apparatus in accordance with another exemplary embodiment;
FIG. 7B is an inside perspective view schematically illustrating a control apparatus in accordance with another exemplary embodiment;
FIG. 8A is a perspective view schematically illustrating a control apparatus in accordance with another exemplary embodiment;
FIG. 8B is an inside perspective view schematically illustrating a control apparatus in accordance with another exemplary embodiment;
FIG. 9A is a perspective view schematically illustrating a control apparatus in accordance with another exemplary embodiment;
FIG. 9B is an inside perspective view schematically illustrating a control apparatus in accordance with another exemplary embodiment;
FIG. 10A is a perspective view schematically illustrating a control apparatus in accordance with another exemplary embodiment;
FIG. 10B is an inside perspective view schematically illustrating a control apparatus in accordance with another exemplary embodiment;
FIG. 11A is a front perspective view schematically illustrating a display apparatus and a control apparatus in accordance with an exemplary embodiment;
FIG. 11B is a rear-side perspective view schematically illustrating a display apparatus and a control apparatus in accordance with an exemplary embodiment;
FIG. 12A is a block diagram schematically illustrating a display apparatus, a control apparatus and a power supply apparatus in accordance with another exemplary embodiment; and
FIG. 12B is a block diagram illustrating a display apparatus, a control apparatus and a power supply apparatus in accordance with another exemplary embodiment.

Exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail since they would obscure the description with unnecessary detail.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element.

As used herein, the term "and/or" includes any and all combinations of one or more of the associated listed items.

Contents may be displayed on a display apparatus. The contents may be received by a control apparatus and/or a display apparatus. For example, the contents may include a video file or audio file played back in a video player, an application, a music file played back in a music player, a photo file displayed in a photo gallery, and a web page file or text displayed in a web browser. In addition, the contents may include a broadcasting being received.

The terminology used herein is for the purpose of describing embodiments only and is not intended to be limiting. As used herein, the singular forms are intended to include the plural forms as well, unless the context clearly indicates otherwise.

It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

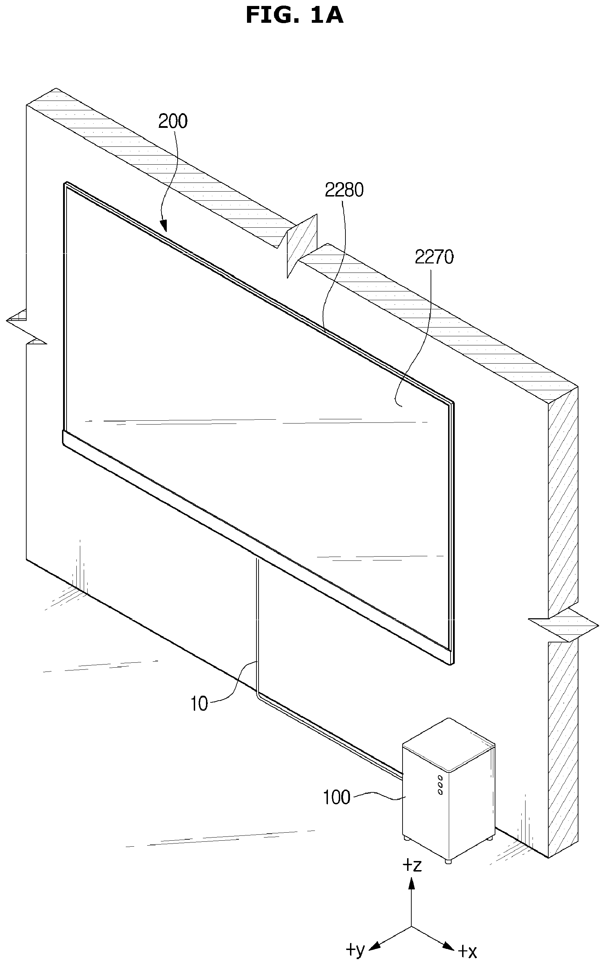

FIG. 1A is a front-side perspective view schematically illustrating a display apparatus and a control apparatus in accordance with an exemplary embodiment.

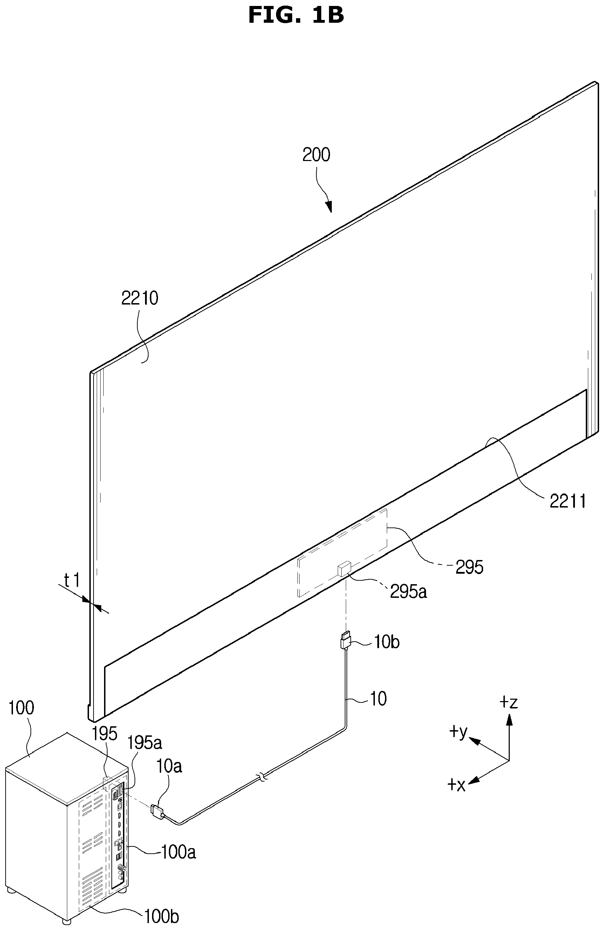

FIG. 1B is a rear-side perspective view schematically illustrating the display apparatus and the control apparatus in accordance with the exemplary embodiment.

Referring to FIGS. 1A and 1B, a display apparatus 200 is fixed to a wall using a wall mount unit based on a watching distance and/or a watching height of a user. The display apparatus 200 may be arranged in a x-axis direction. In addition, the display apparatus 200 may be supported by a stand.

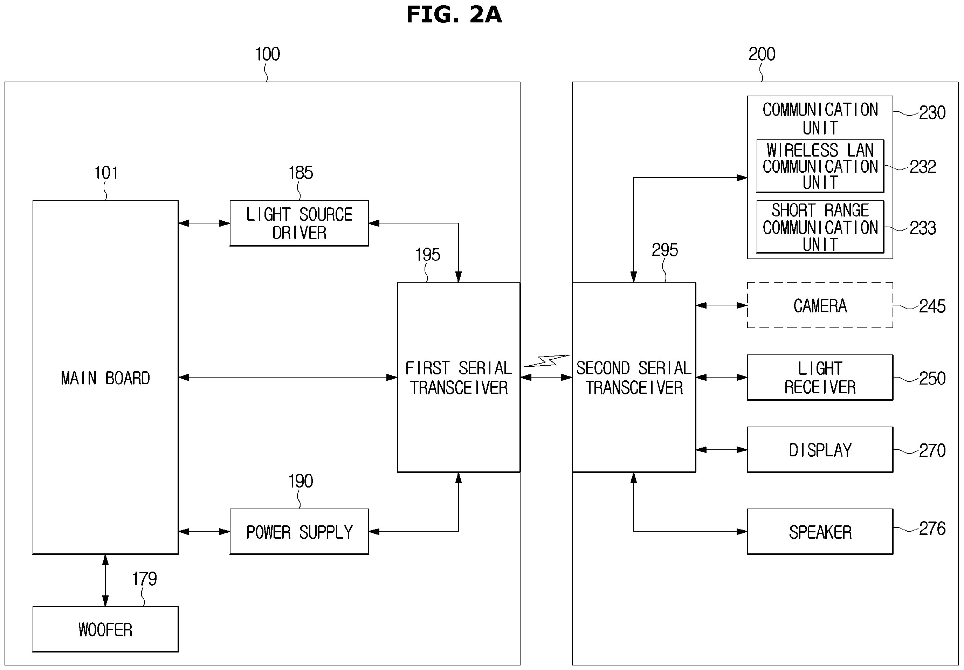

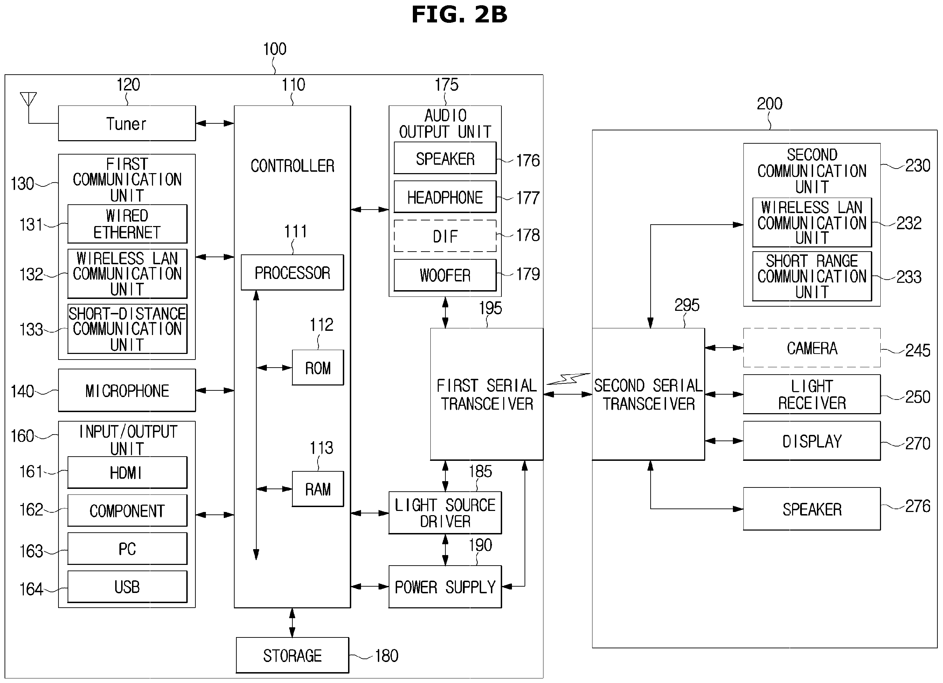

The display apparatus 200 may include a display panel 2270 that displays contents, a bottom chassis 2210 (see FIG. 1B), and a top chassis 2280. The bottom chassis 2210 and the top chassis 2280 may support the display panel 2270. In addition, the display apparatus 200 may include other various components, which will be described later with reference to FIGS. 2 to 4B, in addition to the above described components.

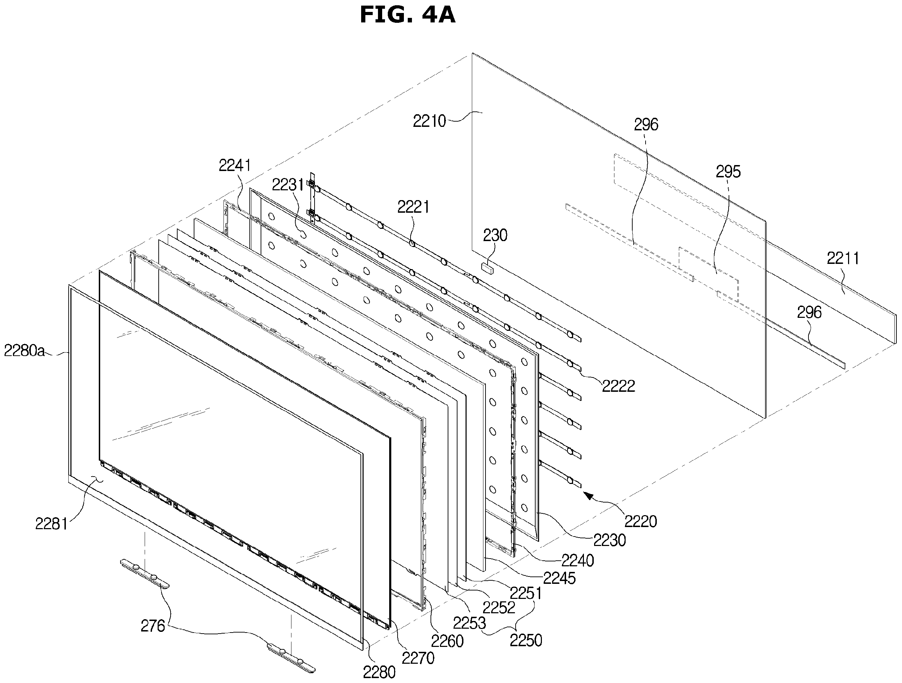

It should be easily understood by those skilled in the art that a size and/or shape of components included in the display apparatus 200 is subject to change in proportion to the decreasing thickness of the display apparatus 200. In addition, a size and/or shape of components included in the display apparatus 200 is subject to change in proportion to the decreasing width of a bezel 2280a (see FIG. 4A) of the top chassis 2280 of the display apparatus 200.

The display apparatus 200 may include an analog television (TV), a digital TV, a 3D-TV, a smart TV, a light emitting diode (LED) TV, an organic light emitting diode (OLED) TV, a plasma TV, a quantum dot TV and/or a monitor. In addition, the display apparatus 200 may include a mobile phone having a display, a smart phone, a MP3 player, a video player, a tablet personal computer (PC), an electronic blackboard and/or a wearable apparatus that is wearable on a human body.

The display apparatus 200 may be provided as a curved display apparatus with a screen having a fixed or a single curvature (e.g., 2000R corresponding to a radius of curvature of 2000 mm), a curved display apparatus with a screen having a plurality of curvatures (e.g., a first curvature of 2000R and a second curvature of 3000R), a flexible display apparatus with a screen having a variable curvature and/or a curvature-variable type display apparatus with a screen being variable from a current curvature to another curvature according to a received user's input. However, implementation of the display apparatus according to the present exemplary embodiment is not limited thereto.

A control apparatus 100 is connected to one side of the display apparatus 200 by using a cable 10. When the display apparatus 200 connected with the control apparatus 100 by using the cable 10 is fixed to a wall by a wall mount unit, a lower end of the display apparatus 200 may be fixed at a position higher than a lower end of the control apparatus 100 (e.g., a bottom surface of the control apparatus 100).

When the display apparatus 200 connected with the control apparatus 100 by using the cable 10 is supported by a stand, a lower end of the display apparatus 200 may be supported at a position higher than a lower end of the control apparatus 100 (e.g., a bottom surface of the control apparatus 100).

The display apparatus 200 may be electrically connected to the control apparatus 100, which controls the display apparatus 200, by using the cable 10, for example, so as to achieve power supply. In addition, the display apparatus 200 may be functionally connected to the control apparatus 100 by using the cable 10, for example, so as to transfer contents. The cable 10 connecting the display apparatus 200 to the control apparatus 100 may be an exclusively-used single cable (e.g., a one-connect cable).

The cable 10 may be provided with connectors 10a and 10b each of which includes pins. The number of the pins of the connectors 10a and 10b may be determined based on a communication speed and/or a level power transmitted from the control apparatus 100 to the display apparatus 200. The number of pins may vary with the number of data lines, the number of control signal lines corresponding to control signals, the number of power lines and/or the number of ground lines inside the cable 10. For example, the connectors 10a and 10b may have 26 pins or 34 pins. In addition, the number of the pins of the connectors 10a and 10b may be less than or equal to 26 or greater than or equal to 34.

Referring to FIG. 1B, a wall mount unit may be coupled to a rear surface of the display apparatus 200 (e.g., the bottom chassis 2210). In addition, a stand may be coupled to the bottom chassis 2210 of the display apparatus 200. The bottom chassis 2210 and the wall mount unit may be coupled to each other by a fastener member, for example, a screw, a rivet, a nut, and the like. In addition, the bottom chassis 2210 of the display apparatus 200 and the stand may be coupled to each other by a fastener member, for example, a screw, a rivet, a nut, and the like.

The cable 10 may be connected to a port disposed at a lower end of the bottom chassis 2210 of the display apparatus 200. The cable 10 may connect a connector 295a of a second serial transceiver (a SerDes unit) 295 provided at a lower end of the bottom chassis 2210 to a connector 195a of a port unit 100a provided on a rear surface of the control apparatus 100. The cable 10 may have elasticity so as to be bent.

The display apparatus 200 has a thickness t1 corresponding to a summation of a thickness of the bottom chassis 2210 and a thickness of the top chassis 2280. For example, the thickness t1 of the display apparatus 200 may be less than or equal to 5.9 mm. The thickness t1 of the display apparatus 200 may be greater than 4.5 mm and less than 5.9 mm. The thickness t1 of the display apparatus 200 may be greater than 3.5 mm and less than 10.0 mm.

When a rear cover 2211 is added to the lower end of the bottom chassis 2210, the thickness of the display apparatus 200 is increased by the thickness of the rear cover 2211. The thickness of the rear cover 2211 added may be 9.2 mm. The thickness of the rear cover 2211 may be greater than or equal to 7.0 mm and less than 10 mm.

It should be understood that the thickness t1 of the display apparatus 200 is subject to change in proportion to the decreasing thickness of the display apparatus 200. In addition, it should be understood that the thickness of the display apparatus 200 having the rear cover 2211 is subject to change in proportion to the decreasing thickness of the display apparatus 200. When the display apparatus 200 is a curved display apparatus, a front surface and a rear surface of the display apparatus 200 may be a curved surface. The bottom chassis 2210 may have the same curvature as a curvature of the display panel 2270. The top chassis 2280 may have the same curvature as a curvature of the display panel 2270. In addition, the top chassis 2280 may have the same curvature as the curvature of the bottom chassis 2210.

When the display apparatus 200 is a curved display apparatus, a rear surface of the display apparatus 200 may have a curvature different from the curvature of the display panel 2270. For example, the display panel 2270 may have a curvature greater than or equal to the curvature of the rear surface of the display apparatus 200. For example, when the display panel 2270 has a curvature of 2000R, the rear surface of the display apparatus 200 has a curvature of 2500R. In addition, the display panel 2270 may have a curvature less than the of the rear surface of the display apparatus 200. For example, when the display panel 2270 has a curvature of 3000R, the rear surface of the display apparatus 200 has a curvature of 2500R.

Various ports may be positioned at the port unit 100a provided on the rear surface of the control apparatus 100, for example, on a case of the control apparatus 100. The port unit 100a of the control apparatus 100 may be positioned on any one of the left side surface and the right side surface other than the rear surface.

The port unit 100a of the control apparatus 100 may include a power terminal that is connected to a one-connect port and/or a power cable connected to the connector 10a of the cable 10.

The control apparatus 100 is provided on the rear surface thereof with one or more High Definition Multimedia Interface (HDMI) ports 161 (see FIG. 2B), one or more universal serial bus (USB) ports 164 (see FIG. 2B), a local area network (LAN) port corresponding to a wired Ethernet 131, a digital audio output port, a coaxial cable connector port (e.g., a port for cable broadcasting, air channel broadcasting, or satellite broadcasting) corresponding to a tuner 120, and/or a speaker output jack.

When the control apparatus 100 includes a plurality of tuners, the port unit 100a of the control apparatus 100 may have a plurality of coaxial cable connector ports corresponding to the plurality of tuners.

The type of the port unit 100a of the control apparatus 100 may be determined according to a communication speed and/or a level of power transmitted to the display apparatus 200.

The control apparatus 100 may be provided on at least one of the front surface, the rear surface, the left side surface and the right side surface thereof with a ventilating opening or a ventilating hole 100b for ventilation. The control apparatus 100 may be provided on at least one of the front surface, the rear surface, the left side surface and the right side surface thereof with a cooling opening or a cooling hole 100b for heat dissipation. In addition, the control apparatus 100 may be provided on one of a top surface and a bottom surface thereof with a ventilation opening or a cooling opening.

FIG. 2A is a block diagram schematically illustrating a display apparatus and a control apparatus in accordance with an exemplary embodiment.

FIG. 2B is a block diagram illustrating a display apparatus and a control apparatus in accordance with another exemplary embodiment.

Referring to FIG. 2A, the control apparatus 100 for controlling the display apparatus 200 includes a main board 101, a woofer 179, a light source driver (e.g., LED driver) 185, a power supply 190 and a first serial transceiver (a SerDes unit) 195. In addition, the control apparatus 100 may include a sensor (e.g., illumination sensor, temperature sensor) to detect an inside state or an outside state of the control apparatus 100.

The main board 101 may include a tuner 120, a first communication unit 130, a microphone 140, an input/output unit 160, an audio output unit 175 and/or a storage 180. The main board 101 may be electrically connected to one of the tuner 120, the first communication unit 130, the microphone 140, the input/output unit 160, the audio output unit 175 and the storage 180 that may be separately provided from the main board 101. In addition, the main board 101 may be electrically connected to a combination of the tuner 120, the first communication unit 130, the microphone 140, the input/output unit 160, the audio output unit 175 and the storage 180 that may be separately provided from the main board 101.

The tuner 120, the first communication unit 130, the microphone 140, the input/output unit 160, the audio output unit 175 and/or the storage 180 that may be included in the main board will be described later with reference to FIG. 2B in detail.

The light source driver 185 drives a light source 2220 (see FIG. 4A) of the display apparatus 200 according to control of the controller 110. The light source driver 185 may perform a constant current control on the light source 2220 of the display apparatus 200 according to control of the controller 110. In addition, the light source driver 185 may perform a constant voltage control on the light source 2220 of the display apparatus 200 according to control of the controller 110.

A driving signal of the light source driver 185 may be transmitted to the display apparatus 200 through the first serial transceiver 195, the cable 10 and the second serial transceiver 295 according to control of the controller 110.

The power supply 190 may supply power being input from an external power source to internal components 110 to 195 of the control apparatus 100 and internal components 230 to 295 of the display apparatus 200 according to control of the controller 110.

The power supply 190 may supply power through the first serial transceiver 195, the cable 10 and the second serial transceiver 295 according to control of the controller 110.

The first serial transceiver 195 may transmit power, control signals and/or data from the control apparatus 100 to the second serial transceiver 295 of the display apparatus 200 through the cable 10 according to control of the controller 110. Details of the first serial transceiver 195 may be described with reference to FIG. 2B.

Referring to FIG. 2A, the display apparatus 200 connected to the control apparatus 100 includes a communication unit 230, a camera 245, a light receiver 250, a display 270, a speaker 276 and a second serial transceiver 295. In addition, the display apparatus 200 may include a display 270 and a second serial transceiver 295.

The display apparatus 200 may be connected to the control apparatus 100 through the second serial transceiver 295. The display apparatus 200 may be connected to the first serial transceiver 195 of the control apparatus 100 through the second serial transceiver 295 via wired or wireless communication.

The communication unit 230, the camera 245, the light receiver 250, the display 270 and/or the speaker 276 of the display apparatus 200 may receive power, a control signal and/or data from the control apparatus 100 through the second serial transceiver 295.

Details of the communication unit 230, the camera 245, the light receiver 250, the display 270, the speaker 276 and/or the second serial transceiver 295 of the display apparatus 200 will be described later with reference to FIG. 2B.

Referring to FIG. 2B, the control apparatus 100 for controlling the display apparatus 200 includes the tuner 120, the first communication unit 130, the microphone 140, the input/output unit 160, the audio output unit 175, the storage 180, the light source driver 185, the power supply 190 and/or the first serial transceiver 195. The control apparatus 100 may include a sensor (e.g., an illumination sensor, or a temperature sensor) to detect an inside state or an outside state of the control apparatus 100.

The controller 110 may include a processor 111, a Read Only Memory (ROM) or non-volatile memory 112 that stores a control program for control of the display apparatus 200, and a Random Access Memory (RAM) or volatile memory 113 that stores signals or data being input from outside of the control apparatus 100 or being used as a storage area corresponding to various tasks performed by the display apparatus 200.

The controller 110 controls an overall operation of the control apparatus 100 and a signal flow among internal components 110 to 195 of the control apparatus 100, and processes data. The controller no controls an overall operation of the display apparatus 200 and a signal flow among internal components 230 to 295 of the display apparatus 200, and processes data.

The controller 110 may transmit a control signal for controlling the display apparatus 200 to the display apparatus 200 through the first serial transceiver 195. The controller 110 may transmit a control signal for controlling the display apparatus 200 to the display apparatus 200 through the first serial transceiver 195, the cable 10 and the second serial transceiver 295.

The controller 110 may receive a response to the control signal for controlling the display apparatus 200 from the display apparatus 200 through the first serial transceiver 195. The controller 110 may receive a response to the control signal for controlling the display apparatus 200 from the display apparatus 200 through the second serial transceiver 295, the cable 10, and the first serial transceiver 195.

The controller 110 controls power being supplied from the power supply 190 to the internal components 110 to 195 of the control apparatus 100. The controller 110 controls power being supplied from the power supply 190 to the internal components 230 to 295 of the display apparatus 200. In addition, the controller 110 may control power being supplied from the power supply 190 to internal components of the display apparatus (e.g., a light source, a display panel, a timing controller, a source driver board and a gate driver board). The controller 110 may control power of the power supply 190 to be supplied to the display apparatus 200 through the first serial transceiver 195.

The processor 111 may include a Graphic Processing Unit (GPU) that processes graphics corresponding to a picture or an image. The processor 111 may be implemented as a System On Chip (SoC) including a core and the GPU. The processor 111 may include a single core, a dual core, a trifle core, a quad core, or a multiple core thereof.

The processor 111 may include a plurality of processors including a main processor and a sub processor that operates in a standby mode. In addition, the processor 111 may further include a sensor processor that controls a sensor.

The processor 111, the ROM 112 and/or the RAM 113 may be connected to each other through an internal bus.

The term "the controller 110 of the control apparatus" according to the exemplary embodiment may refer to a concept including the processor 111, the ROM 112 and the RAM 113 of the control apparatus 100. The controller 110 of the control apparatus may include at least one of the main processor and the sub processor. In addition, the controller 110 of the control apparatus may include at least one of the main processor and the sub processor, the ROM 112 and the RAM 113.

It will be easily understood by those of ordinary skilled in the art that the configuration and operation of the controller 110 may be implemented in various types according to exemplary embodiments.

The tuner 120 may select a desired channel frequency to be received by the control apparatus 100 among a number of electric wave components, by performing frequency tuning through amplification, mixing, and resonance on broadcasting signals received via wireless or wired communication. The broadcasting signals may include a video, an audio and additional data, for example, Electronic Program Guide (EPG).

The tuner 120 may receive images, audio and data at a frequency range corresponding to a channel number (e.g., channel No. 227 of a cable broadcasting program) according to control information received from a user input (e.g., user command input through a remote controller), the control information including a channel number input and a channel up-down input. In addition, the tuner 120 may receive images, audio and data at a frequency range corresponding to a channel number (e.g., channel No. 227 of a cable broadcasting program) according to a user's input (e.g., a user's voice or motion).

The tuner 120 may be implemented as an all-in-one tuner integrally formed with the control apparatus 100, may be implemented as a separate apparatus having a tuner unit electrically connected to the control apparatus 100, for example, as a set-top box, or may be provided as a tuner connected to the input/output unit 160.

The communication unit 130 may connect the control apparatus 100 to an external electronic apparatus (e.g., a server or a broadcasting station) according to control of the controller 110. The communication unit 130 may connect the control apparatus 100 to the display apparatus 200 according to control of the controller 110 via wireless communication. The communication unit 130 of the control apparatus 100 may be referred to as a first communication unit. In addition, the communication unit 230 of the display apparatus 200 may be referred to as a second communication unit.

The controller 110 may download an application from the external electronic apparatus through the communication unit 130, or perform web browsing for the application. In addition, the communication unit 130 may receive control information from a remote controller according to control of the controller 110.

The communication unit 130 may include at least one of a wired Ethernet 131, a wireless LAN communication unit 132 and a short-distance communication unit 133 according to the performance and structure of the control apparatus 100.

The wireless LAN communication unit 132 may be connected to an access point (AP) via wireless communication according to control of the controller 110 in a place where the AP is installed. The wireless LAN communication unit 132 may include Wi-Fi. The wireless LAN communication unit 132 may support wireless LAN standards of Institute of Electrical and Electronics Engineers (IEEE).

The short distance communication unit 133 may perform a bluetooth scheme, a bluetooth low energy scheme, an infrared data association (IrDA) scheme, a Ultra Wideband (UWB) scheme, a magnetic secure transmission (MST) scheme and/or a Near Field Communication (NFC) scheme.

The microphone 140 receives a user's utterance speech.

The microphone 140 converts the received speech into an electrical signal and outputs the converted electrical signal into the controller 110. The user's speech may include a speech corresponding to a control of a menu or function of the display apparatus 200. A range of recognition of the microphone 140 may vary with the magnitude of a user's voice and surrounding environment (e.g., speaker's voice and ambient noise).

The microphone 140 may be disposed in the display apparatus 200. The speech received by the microphone 140 of the display apparatus 200 is converted into an electrical signal that is then transmitted to the controller 110 through the second serial transceiver 295, the cable 10 and the first serial transceiver 195.

The microphone 140 may be integrally formed with or separately formed from the control apparatus 100. The microphone 140 separated from the control apparatus 100 may be electrically connected to the control apparatus 100 through the communication unit 30 or the input/output unit 160. In addition, the microphone 140 may be integrally formed with or separately formed from the display apparatus 200.

The input/output unit 160 receives contents from outside of the control apparatus 100 according to control of the controller 110. The contents may include a video, an image, a text or a web document. In addition, the contents may include a video including advertisement, an image including advertisement, or a web document including advertisement.

The port unit 100a corresponding to the input/output unit 160 may include at least one of a High Definition Multimedia Interface (HDMI) port 161, a component input jack 162, a PC input port 163, and a USB input jack 164..

It will be easily understood by those of ordinary skilled in the art that addition, modification or omission of a port of the port unit 100a corresponding to the input/output unit 160 may be possible.

The audio output unit 175 outputs an audio included in a broadcasting signal received from the tuner 120 according to control of the controller 110. The audio output unit 175 may output an audio (e.g., speech, sound) being input through the communication unit 130 or the input/output unit 160. In addition, the audio output unit 175 may output audio data stored in the storage 180 according to control of the controller 110.

The audio output unit 175 may include at least one of a speaker 176, a headphone output terminal 177, a digital interface format (DIF) output terminal 178 and a woofer 179.

The speaker 176 may include one or more speakers provided at the control apparatus 100. According to an exemplary embodiment, the speaker 176 provided at the control apparatus 100 may be referred as an internal speaker. Another speaker except for the internal speaker of the control apparatus 100 may be referred to an additional speaker (e.g., the speaker 278 of the display apparatus 200 and a speaker connectable to the communication unit 130, the input/output unit 160 and the audio output unit 175).

The term'a speaker' according to the exemplary embodiment may refer to a concept including the internal speaker and the additional speaker.

At least one of components of the speaker 176, such as a cone and a dust cap, may be exposed to the outside of the control apparatus 100. The cone and the dust cap may vibrate air in response to movement of a voice coil according to current applied to the speaker 176.

The speaker 176 may be provided as a 1 channel speaker, a 2 channel speaker, a 2.1 channel speaker or other types of speakers having more channels. In addition, the speaker 176 may be provided as a 4 channel speaker, a 4.1 channel speaker, a 5.1 channel speaker, a 6.1 channel speaker, a 7.1 channel speaker, a 9.1 channel speaker or a 11.2 channel speaker by using at least one of the communication unit 130, the input/output unit 160 and the audio output unit 175. In addition, the speaker 176 may be provided as a 4 channel speaker, a 4.1 channel speaker, a 5.1 channel speaker, a 6.1 channel speaker, a 7.1 channel speaker, a 9.1 channel speaker or a 11.2 channel speaker by using at least one of the speaker 276 of the display apparatus 200, the communication unit 130, the input/output unit 160 and the audio output unit 175. However, the number of channels of the speaker 176 is not limited thereto.

The controller 110 may output decoded audio (e.g., an audio corresponding to 2.0 channels) through a 5.1 channel speaker or a 7.1 channel speaker (using an internal speaker or an additional speaker) by up-mixing the decoded audio. The controller 110 may output decoded audio (e.g., an audio corresponding to 2.0 channels) through the speaker 176, for example, a 4.0 channel speaker, a 4.1 channel speaker, or a 5.1 channel speaker, by up-mixing the decoded audio.

The controller 110 may output decoded audio (e.g., an audio corresponding to 7.1 channels) through a 2 channel speaker or a 5.1 channel speaker (using an internal speaker or an additional speaker) by down-mixing the decoded audio. The controller 110 may output decoded audio (e.g., an audio corresponding to 7.1 channels) through a 2 channel speaker, a 4.0 channel speaker, a 4.1 channel speaker or a 5.1 channel speaker, by down-mixing the decoded audio.

The controller 110 may output decoded audio in consideration of the number of speakers corresponding to the decoded audio and the number of speakers connected to a broadcast receiving apparatus. For example, when the number of speakers corresponding to decoded audio corresponds to a 7.1 channel, the controller 110 may output the audio through a 4.1 channel scheme based on information (e.g., 2.1 channel) of the detected speaker 176 of the control apparatus 100 and an additional speaker.

The woofer 179 may include one or more woofers provided at the control apparatus 100. One of components of the woofer 179, such as a cone and a dust cap, may be exposed to the outside of the control apparatus 100. The cone and the dust cap may vibrate air in response to movement of a voice coil according to current applied to the woofer 179.

The controller 110 may provide a user with various audio output effects (e.g., concert site effect or orchestra hall effect) according to the number of internal speakers. In addition, the controller 110 may provide a user with various audio output effects (e.g., concert site effect or orchestra hall effect) according to the number of internal speakers and the woofer 179.

The controller 110 may provide a user with various audio output effects according to the internal speaker, the woofer 179 and the additional speaker.

The storage 180 may store various data, programs or applications to drive and control the control apparatus 100 according to control of the controller 110. In addition, the storage 180 may store various data, programs or applications to drive and control the display apparatus 200 according to control of the controller 110. The storage 180 may store signals or data being input/output in correspondence to driving of the tuner 120, the communication unit 130, the microphone 140, the input/output unit 160, the audio output unit 175, the light source driver 185, the power supply 190 and the first serial transceiver 195.

The storage 180 may store a control program to control the control apparatus 100, the display apparatus 200 and/or the controller 110, an application initially provided by a manufacturer or downloaded from outside, an application-related graphical user interface (GUI), an object for providing a GUI (e.g., an image text, an icon, a button), user information, a document, database or other relevant data.

The term 'a storage' according to the exemplary embodiment refers to a concept including the storage 180 of the control apparatus 100, the ROM 112 and the RAM 113 of the controller 110, or a memory card installed on the control apparatus 100, for example, a micro SD card, a USB memory. The storage may include a non-volatile memory, a volatile memory, a hard disk drive (HDD) or a solid state drive (SSD).

The storage 180 may include a broadcast receiver module, a channel control module, a volume control module, a communication control module, a speech recognition module, a motion recognition module, a light receiving module, a display apparatus control module, an audio control module, an external input control module, a power control module, a speech database (DB) or a motion database (DB) corresponding to the control apparatus 100 and the display 200.

The modules and database of the storage 180 may be implemented as software to perform a control function of broadcast receiving, a channel control function, a volume control function, a communication control function, a speech recognition function, a motion recognition function, a light receiving function, a display apparatus control function, an audio control function, an external input control function or a power control function in the control apparatus 100 and the display apparatus 200 in the control apparatus 100 and the display apparatus 200.

The controller 110 may control the functions of the control apparatus 100 and/or the functions of the display apparatus 200 by using the software stored in the storage 180.

The term 'a storage' according to the exemplary embodiment refers to hardware including the storage 180, for example, implemented as the ROM 112, the RAM 113 and the SoC of the controller 110, or a memory card installed on at least one of the control apparatus 100 and the display apparatus 200 (e.g., a micro SD card, a USB memory). The storage may include a non-volatile memory, a volatile memory, a hard disk drive (HDD) or a solid state drive (SSD).

The light source driver 185 may drive the light source 2220 of the display apparatus 200 according to control of the controller 110. The light source driver 185 may turn on and off the light source 2229, and control the light source 2220 to flash or flicker. The light source driver 185 may perform a constant current control on the light source 2220 of the display apparatus 200 according to control of the controller 110.

The light source driver 185 may transmit a light source driver signal to the display apparatus 200 through the first serial transceiver 195, the cable 10 and the second serial transceiver 295 according to control of the controller 110.

The power supply 190 supplies power from an external power source to the internal components 110 to 195 of the control apparatus 100 according to control of the controller 110. In addition, the power supply 190 supplies power from an external power source to the internal components 230 to 295 of the display apparatus 200 according to control of the controller 110.

The power supply 190 may transmit power to the components 230 to 295 of the display apparatus 200 through the first serial transceiver 195, the cable 10 and the second serial transceiver 295 according to control of the controller 110.

The first serial transceiver 195 may transmit power, a control signal and/or data of the control apparatus 100 to the second serial transceiver 295 of the display apparatus 200 through the cable 10 according to control of the controller 110. In addition, the first serial transceiver 195 may receive responses corresponding to control of the power, control signal and/or data from the second serial transceiver 295 of the display apparatus 200 through the cable 10 according to control of the controller 110.

The control signal and/or data being received from the second serial transceiver 295 may be stored in the storage 180 according to control of the controller 110.

The first serial transceiver 195 may be separately provided from the main board 101 or integrally formed with the main board 101.

A serial transceiver converts a parallel data into a serial data and converts a serial data into a parallel data. The serial transceiver may be referred to as a serializer/deserializer (SerDes). The first serial transceiver 195 may transmit data to the display apparatus 200 at a high speed by converting a parallel data into a serial data. For example, the high speed data transmission may be performed within a range between 6.25 Gbps and 12.5 Gbps. However, the range between 6.25 Gbps and 12.5 Gbps is only an example of the high speed data transmission, and it will be easily understood by those of ordinary skilled in the art that the high speed data transmission may be performed over the range between 6.25 Gbps and 12.5 Gbps.

The first transceiver 195 may include the connector 195a (see FIG. 1B) connected to the connector 10a of the cable 10. The connector 195a may include a plurality of pins.

The connector 195a may be provided with pins, the number of which may vary. The number of pins corresponding to control signals, power and/or data received from the main board 101, the light source driver 185 and/or the power supply 190 of the control apparatus 100 may be different from the number of pins corresponding to the coupling with the connector 10a of the cable 10. For example, the number of pins corresponding to control signals, power and/or data received from the control apparatus 100 (e.g., 34 pins) may be greater than the number of pins corresponding to the coupling with the cable 10 (e.g., 26 pins).

The above described number of pins is only an example, and it will be easily understood by those of ordinary skilled in the art that the number of pins is not limited thereto.

The pins of the connector 195a are provided inside the connector 195a (e.g., a receptacle-type connector) without being protruded to the outside. Alternatively, the connector 195a may have a plug type and be exposed to the outside.

At least one of the components 110 to 195 of the control apparatus 100 illustrated in FIGS. 1A, 1B and FIG. 2A may be added or omitted according to the performance of the control apparatus 100 and/or the display apparatus 200. In addition, it will be easily understood by those of ordinary skilled in the art that the positions of the components 110 to 195 may be varied according to the performance or structure of the control apparatus 100 and/or the display apparatus 200.

Referring to FIG. 2B, the display apparatus 200 includes the communication unit 230, the camera 245, the light receiver 250, the display 270, the speaker 276 and the second serial transceiver 295.

The display apparatus 200 may include the display 270 and the second serial transceiver 295. In addition, the display apparatus 200 may include the timing controller, the source driver board 296 (see FIG. 4A), the gate driver board, the display 270 and the second serial transceiver 295.

The timing controller may generate control signals and video data (or still image data) corresponding to video (or an still image) received from the control apparatus 100 through the second serial transceiver 295, and may transmit the generated video data (or still image data) and generated control signal to the source driver board 296 and the gate driver board.

The source driver board 296 and the gate driver board may generate an analog signal corresponding to the video data (or still image data) and the control signal that are received from the timing controller.

The communication unit 230 may connect the display apparatus 200 to an external apparatus (e.g., a portable apparatus, a display apparatus or a server) according to control of the controller 110. The communication unit 230 may be connected to the control apparatus 100 according to control of the controller 110. When the display apparatus 200 is connected to the control apparatus 100, the communication unit 230 of the display apparatus 200 may be referred to as a second communication unit.

The controller 110 may download an application from the outside through the communication unit 230 or web browse for the application through the communication 230. In addition, the communication unit 230 may receive control information from a remote control apparatus according to control of the controller 110. The downloaded application or control signal may be stored in the storage 180 through the second transceiver 295 and the first transceiver 195 according to control of the controller 110.

The communication unit 230 may include at least one of a wireless LAN communication unit 232 and a short distance communication unit 233 according to the performance and structure of the control apparatus 100. In addition, the communication unit 230 may include a combination of the wireless LAN communication unit 232, or the short range communication unit 233.

The wireless LAN communication unit 232 may be connected to an access point (AP) via wireless communication according to control of the controller 110 in a place where the AP is installed. The wireless LAN communication unit 232 may include Wi-Fi. The wireless LAN communication unit 232 may support wireless LAN standards of Institute of Electrical and Electronics Engineers (IEEE).

The short distance communication unit 233 may perform a bluetooth scheme, a bluetooth low energy scheme, an infrared data association (IrDA) scheme, a Ultra Wideband (UWB) scheme, a magnetic secure transmission (MST) scheme and/or a Near Field Communication (NFC) scheme.

The camera 245 receives a video (e.g., consecutive frames) corresponding to a user's motion including a gesture within a recognition range of the camera 245. The user's motion may include movement of a part of a user's body, such as face movement, facial expression, hand movement, fist movement and finger movement of the user.

The camera 245 may convert a received video into an electrical signal according to control of the controller 110 and output the converted signal to the controller 110 through the second serial transceiver 295, the cable 10 and the first serial transceiver 195. The controller 110 may display a menu (e.g., channel adjustment or volume adjustment menu) on the display apparatus 200 by using a result of motion recognition, or perform a control corresponding to the result of motion recognition.

The camera 245 may include a lens and an image sensor. The camera 245 may support an optical zoom or a digital zoom by using a plurality of lenses and image processing.

When the camera 245 includes a plurality of cameras, a three-dimensional (3D) still image or a 3D motion may be received by using a first camera provided at a front side of the display apparatus 200 and a second camera that is adjacent to the first camera while spaced apart from the first camera by an interval greater than 5 mm and less than 80 mm.

The camera 245 may be separately provided from the display apparatus 200, as well as integrally formed with the display apparatus 200. An electronic apparatus including the separate camera unit may be electrically connected to the display apparatus 200 through the communication unit 230.

In addition, the camera 245 may be integrally formed with or separately formed from the control apparatus 100. An electronic apparatus including the separate camera unit may be electrically connected to the control apparatus 100 through the communication unit 130 or the input/output unit 160.

The light receiver 250 receives an infrared signal (including control information), which is output from the remote control apparatus, through a light window. The light receiver 250 may receive an infrared signal corresponding to a user's input (for example, a touch, a pressing, a touch gesture, a voice or a motion) from the remote control apparatus. Control information may be extracted from the received infrared signal.

The display 270 of the display apparatus 200 displays a video included in broadcasting signals being received through the tuner 120 according to control of the controller 110.

A received video may be received through the first serial transceiver 195, the cable 10 and the second serial transceiver 295 and displayed on the display 270 according to control of the controller 110. A video included in the broadcasting signal received through the tuner 120 may be received through the first serial transceiver 195, the cable 10 and the second serial transceiver 295, and converted by the timing controller, the source driver board 296 and the gate driver board of the display apparatus 200, and then displayed on the display 270 according to control of the controller 110.

The display 270 of the display apparatus 200 may receive a video (e.g., a moving image) being input through the communication units 130 and 230 or the input/output unit 160 from the control apparatus 100 and display the received video according to control of the controller 110. The video (e.g., a moving image) being input through the communication units 130 and 230 or the input/output unit 160 may be received through the first serial transceiver 195, the cable 10 and the second serial transceiver 295, and converted by the timing controller, the source driver board 296 and the gate driver board of the display apparatus 200, and then displayed on the display 270 according to control of the controller 110.

The display 270 of the display apparatus 200 may receive a video data stored in the storage 180 from the control apparatus 100 and output the received video according to control of the controller 110. The video stored in the storage 180 may be received through the first serial transceiver 195, the cable 10 and the second serial transceiver 295 and converted by the timing controller, the source driver board 296 and the gate driver board of the display apparatus 200 and then displayed on the display 270 according to control of the controller 110.

The display 270 may display a voice user interface (UI), including a voice command guide, to perform a voice recognition task corresponding to voice recognition, or may display a motion UI, including a motion command guide for motion recognition, to perform a motion recognition task corresponding to motion recognition.

A screen of the display apparatus 200 in accordance with an exemplary embodiment may refer to a concept including the display 270 of the display apparatus 200.

The speaker 276 outputs an audio included in the broadcasting signals received through the tuner 120 according to control of the controller 110 of the control apparatus 100. The audio included in the broadcasting signal received through the tuner 120 may be received by the display apparatus 200 through the first serial transceiver 195, the cable 10 and the second serial transceiver 295 and output through the speaker 276 according to control of the controller 110.

The speaker 276 of the display apparatus 200 may receive an audio (e.g., voice, sound) being input through the communication units 130 and 230 or the input/output unit 160 from the control apparatus 100, and output the received audio. The audio being input through the communication units 130 and 230 or the input/output unit 160 may be received through the first serial transceiver 195, the cable 10 and the second serial transceiver 295 by the display apparatus 200 and output through the speaker 276 according to control of the controller 110.

The speaker 276 may receive an audio stored in the storage 180 of the control apparatus 100 and output the received audio according to control of the controller 110 of the control apparatus 100. The audio stored in the storage 180 may be received through the first serial transceiver 195, the cable 10 and the second serial transceiver 295 by the display apparatus 200 and output through the speaker 276 according to control of the controller 110.

The speaker 276 may be provided as a 1 channel speaker, a 2 channel speaker, a 4 channel speaker, a 6 channel speaker or other types of speakers having more channels. The speaker 276 may be provided as a 4 channel speaker, a 4.1 channel speaker, a 5.1 channel speaker, a 6.1 channel speaker, a 7.1 channel speaker, a 9.1 channel speaker or a 11.2 channel speaker by using at least one of the communication unit 130, the input/output unit 160 and the audio output unit 175 of the control apparatus 100. In addition, the speaker 276 may be provided as a 4 channel speaker, a 4.1 channel speaker, a 5. channel speaker, a 6.1 channel speaker, a 7.1 channel speaker, a 9. channel speaker or a 11.2 channel speaker by using at least one of the communication unit 130, the input/output unit 160, the audio output unit 175 and the speaker 176 of the control apparatus 100, and it will be easily understood by those of ordinary skilled in the art that that the implementation of the speaker is not limited thereto

The speaker 276 may be provided as a 2.1 channel speaker, a 4.1 channel speaker, a 4.2 channel speaker, a 6.1 channel speaker, a 6.2 channel speaker, a 7.1 channel speaker, a 9.1 channel speaker or other types of speakers having more channels in combination of the woofer 179 of the control apparatus 100.

The speaker 276 may provide a user with various audio output effects (e.g., concert site effect or orchestra hall effect) according to the number of internal speakers and the number of speakers according to control of the controller 110. In addition, the speaker 276 may provide a user with various audio output effects according to the number of internal speakers and the woofer 179 according to control of the controller 110.

The second serial transceiver 295 may receive power, control signals and/or data from the first serial transceiver 195 from the first serial transceiver 195 of the control apparatus 100 according to control of the controller 110 of the control apparatus 100. In addition, the second serial transceiver 295 may transmit responses corresponding to control of the power, control signals and/or data to the first serial transceiver 195 of the control apparatus 100 according to control of the controller 110 of the control apparatus 100.

The second serial transceiver 295 may be integrally formed with or separately formed from the timing controller. The second serial transceiver 295 may convert a serial data transmitted at a high speed from the first serial transceiver 195 to a parallel data again.

The controller 110 may transmit the control signals, power and/or data received through the second serial transceiver 295 to the components 230 to 296 of the display apparatus 200. In addition, the power, control signals and/or data received through the second serial transceiver 295 may be transmitted to the timing controller, the source driver board 296 and the gate driver board of the display apparatus 200.

The second serial transceiver 295 may include the connector 295a (see FIG. 1B) connected to the connector 10b of the cable 10. The connector 295a may include a plurality of pins.

The pins may be provided with pins, the number of which may vary. The number of pins corresponding to the coupling with the connector 10b of the cable 10 may be different from the number of pins corresponding to the control signals, power and/or data being output to the display apparatus 200. For example, the number of pins corresponding to the coupling with the connector 10b of the cable 10 (e.g., 26 pins) may be less than the number of pins corresponding to the control signals, power and data being output to the display apparatus 200 (e.g., 34 pins).

The number of pins described above is only an example, and it will be easily understood by those of ordinary skilled in the art that the number of pins is not limited thereto.

The pins of the connector 295a are provided inside the connector 295a (e.g., a receptacle-type connector) without being protruded to the outside. Alternatively, the connector 295a may have a plug type and be exposed to the outside.

At least one of the components 230 to 295 of the display apparatus 200 illustrated in FIGS. 1A, 1B and FIG. 2A and FIG. 2B may be added or omitted according to the performances of the control apparatus 100 and/or the display apparatus 200. In addition, it will be easily understood by those of ordinary skilled in the art that the positions of the components 230 to 295 may be varied according to the performance or structure of the control apparatus 100 and/or the display apparatus.

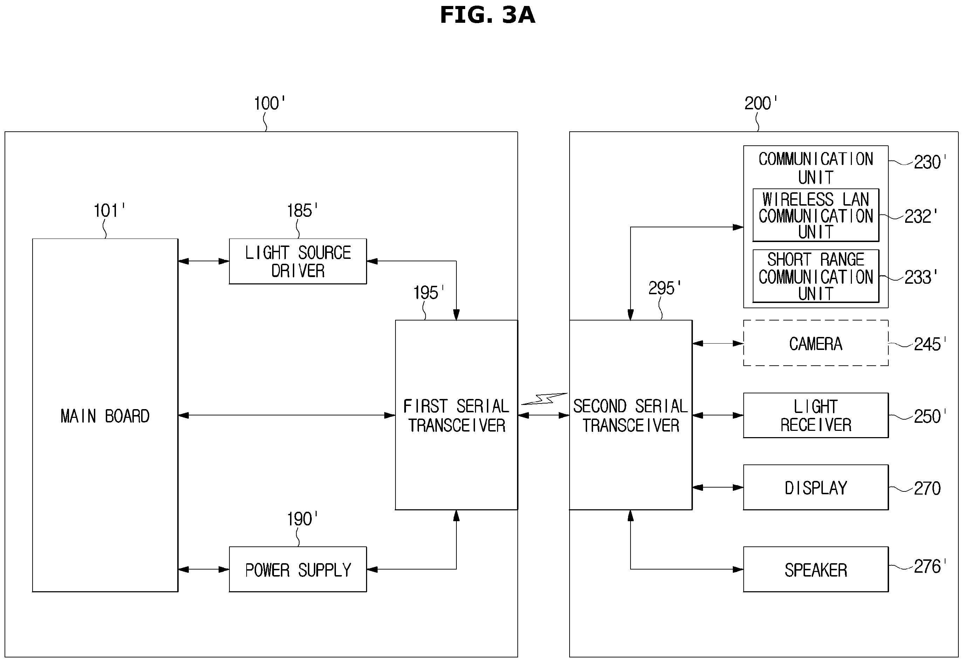

FIG. 3A is a block diagram illustrating a display apparatus and a control apparatus in accordance with another exemplary embodiment.

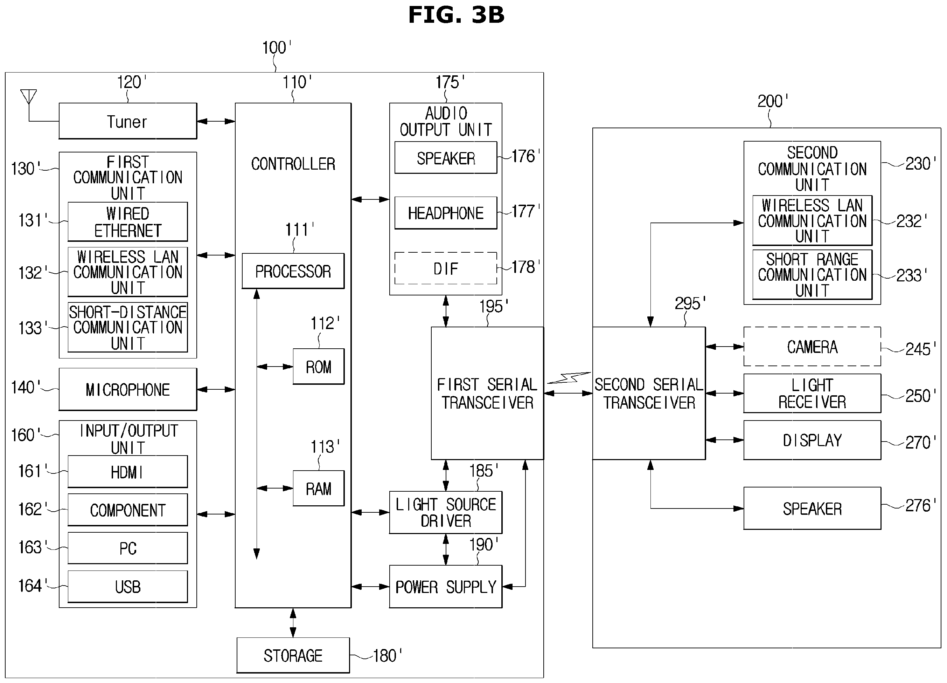

FIG. 3B is a block diagram illustrating a display apparatus and a control apparatus in accordance with another exemplary embodiment.

Referring to FIG. 3A, a control apparatus 100' configured to control a display apparatus 200' includes a main board 101', a light source driver 185', a power supply 190' and a first serial transceiver 195'. In addition, the control apparatus 100' may include a sensor (e.g., an illumination sensor or a temperature sensor to detect an inside state or an outside state of the control apparatus 100'.

The main board 101' may include a tuner 120', a first communication unit 130', a microphone 140', an input/output unit 160', an audio output unit 175' and/or a storage 180' except for a woofer.

The tuner 120', the first communication unit 130', the microphone 140', the input/output unit 160', the audio output unit 175' except for the woofer, and/or the storage 180', which are able to be included in the main board 101', will be described later with reference to FIG. 3B.

The light source driver 185' drives a light source 2220 (see FIG. 4A) of the display apparatus 200' according to control of the controller 110'. The light source driver 185a' of FIG. 3A is substantially the same as the light source driver 185 of FIG. 2A, and the same description will be omitted.

The power supply 190' may supply power being input from an external power source to internal components 110' to 195' of the control apparatus 100' and internal components 230' to 295' of the display apparatus 200' according to control of the controller 110'. The power supply 190' of FIG. 3A is substantially the same as the power supply 190 of FIG. 2A, and the same description will be omitted.

The first serial transceiver 195' may transmit power, control signals and/or data from the control apparatus 100' to the second serial transceiver 295' of the display apparatus 200' through the cable 10 according to control of the controller 110'. The first serial transceiver 195' of FIG. 3A is substantially the same as the first serial transceiver 195 of FIG. 2A, and the same description will be omitted.

Referring to FIG. 3A, the display apparatus 200' connected to the control apparatus 100' includes a communication unit 230', a camera 245', a light receiver 250', a display 270', a speaker 276' and the second serial transceiver 295'. The display apparatus 200' connected to the control apparatus 100' includes a communication unit 230', a camera 245', a light receiver 250', a display 270', a speaker 276', a woofer and the second serial transceiver 295'. In addition, the display apparatus 200' may include a display 270' and a second serial transceiver 295'.

The display apparatus 200' may be connected to the control apparatus 100' through the second serial transceiver 295'. The display apparatus 200' may be connected to the first serial transceiver 195' of the control apparatus 100' through the second serial transceiver 295' via wired or wireless communication.

The communication unit 230', the camera 245', the light receiver 250', the display 270' and/or the speaker 276' of the display apparatus 200' may receive power, a control signal and/or data being transmitted from the control apparatus 100' through the second serial transceiver 295'. In addition, the communication unit 230', the camera 245', the light receiver 250', the display 270', the speaker 276' and/or the woofer of the display apparatus 200' may receive power, a control signal and/or data being transmitted from the control apparatus 100' through the second serial transceiver 295'.

Details of the communication unit 230', the camera 245', the light receiver 250', the display 270', the speaker 276' and/or the second serial transceiver 295' of the display apparatus 200' will be described later with reference to FIG. 3B.

Referring to FIG. 3B, the control apparatus 100' for controlling the display apparatus 200' includes the tuner 120', the first communication unit 130', the microphone 140', the input/output unit 160', the audio output unit 175', the storage 180', the light source driver 185', the power supply 190' and/or the first serial transceiver 195'. The control apparatus 100' may include a sensor (e.g., an illumination sensor or a temperature sensor) to detect an inside state or an outside state of the control apparatus 100'.

The controller 110' may include a processor 111', a Read Only Memory (ROM) or non-volatile memory 112' that stores a control program for control of the display apparatus 200', and a Random Access Memory (RAM) or volatile memory 113' that stores signals or data of the control apparatus 100' or is used as a storage area corresponding to various tasks performed by the display apparatus 200'.

The controller 110' controls an overall operation of the control apparatus 100' and a signal flow among the internal components 110' to 195 of the control apparatus 100', and processes data of the control apparatus 100'. The controller 110' controls an overall operation of the display apparatus 200' and a signal flow among the internal components 230' to 295' of the display apparatus 200', and processes data of the display apparatus 200'.

The controller 110' may transmit a control signal for controlling the display apparatus 200' to the display apparatus 200' through the first serial transceiver 195'. The controller 110' may receive a response to the control signal for controlling the display apparatus 200' from the display apparatus 200' through the first serial transceiver 195'.

The control apparatus 110' controls power supplied from the power supply 190' to the internal components 110' to 195' of the control apparatus 100'.

The controller 110' of FIG. 3B is substantially the same as the controller 110 of FIG. 2B, and the same description will be omitted.

It will be easily understood by those of ordinary skilled in the art that the configuration and operation of the controller 110' may be provided in various types according to exemplary embodiments.

The tuner 120' may select a desired channel frequency to be received by the control apparatus 100' among a number of electric wave components by performing frequency tuning through amplification, mixing, and resonance on broadcasting signals received via wireless or wired communication. The broadcasting signals may include a video, an audio and additional data, for example, Electronic Program Guide (EPG).

The tuner 120' of FIG. 3B is substantially the same as the tuner 120 of FIG. 2B, and the same description will be omitted.

The communication unit 130' may connect the control apparatus 100' to an external electronic apparatus (e.g., a server or a broadcasting station) according to control of the controller 110'. The communication unit 130' may connect the control apparatus 100' to the display apparatus 200' according to control of the controller 110'. The communication unit 130' of the control apparatus 100' may be referred to as a first communication unit. In addition, the communication unit' 230 of the display apparatus 200' may be referred to as a second communication unit.

The communication unit 130' may include at least one of a wired Ethernet 131', a wireless LAN communication unit 132' and a short-distance communication unit 133' according to the performance and structure of the control apparatus 100'.

The communication unit 130' of FIG. 3B is substantially the same as the communication unit 130 of FIG. 2B, and the same description will be omitted.

The microphone 140' receives a user's utterance speech.

The microphone 140' converts the received speech into an electrical signal and outputs the converted electrical signal into the controller 110'. The microphone 140' of FIG. 3B is substantially the same as the microphone 140 of FIG. 2B, and the same description will be omitted.

The input/output unit 160' receives contents from outside of the control apparatus 100' according to control of the controller 110'. The contents may include a video, an image, a text or a web document. In addition, the contents may include a video including advertisement, an image including advertisement, or a web document including advertisement.

The input/output unit 160' of FIG. 3B is substantially the same as the input/output unit 160 of FIG. 2B, and the same description will be omitted.

The audio output unit 175' outputs an audio included in a broadcasting signal received from the tuner 120' according to control of the controller 110'. The audio output unit 175' may output an audio (e.g., speech or sound) being input through the communication unit 130' or the input/output unit 160'. In addition, the audio output unit 175' may output audio data stored in the storage 180' according to control of the controller 110'.

The audio output unit 175' may include at least one of a speaker 176', a headphone output terminal 177', and a digital interface format (DIF) output terminal 178'.

The audio output unit 175' of FIG. 3B is substantially the same as the audio output unit 175 of FIG. 2B except for the woofer 179, and the same description will be omitted.

The storage 180' may store various data, programs or applications to drive and control the control apparatus 100' according to control of the controller 110'. In addition, the storage 180' may store various data, programs or applications to drive and control the display apparatus 200' according to control of the controller 110'. The storage 180' may store signals or data being input/output in correspondence to driving of the tuner 120', the communication unit 130', the microphone 140', the input/output unit 160', the audio output unit 175', the light source driver 185', the power supply 190' and the first serial transceiver 195'.

The storage 180' of FIG. 3B is substantially the same as the storage 180 of FIG. 2B, and the same description will be omitted.

The light source driver 185' drives the light source 2220 of the display apparatus 200' according to control of the controller 11'0. The light source driver 185' may drive the light source 2220 to turn on/off or flash. The light source driver 185' may perform a constant current control on the light source 2220 of the display apparatus 200' according to control of the controller 110'.

The light source driver 185' of FIG. 3B is substantially the same as the light source driver 185 of FIG. 2B, and the same description will be omitted.

The power supply 190' supplies power from an external power source to the internal components 110' to 195' of the control apparatus 100' according to control of the controller 110'. In addition, the power supply 190' supplies power from an external power source to the internal components 230' to 295' of the display apparatus 200' according to control of the controller 110.

The power supply 190' of FIG. 3B is substantially the same as the power supply 190 of FIG. 2B, and the same description will be omitted.

The first serial transceiver 195' may transmit power and a control signal and/or data of the control apparatus 100' to the second serial transceiver 295' of the display apparatus 200' though the cable 10' according to control of the controller 110'. In addition, the first serial transceiver 195' may receive responses corresponding to controls of the power, control signal and/or data from the second serial transceiver 295 of the display apparatus 200' through the cable 10' according to control of the controller 110'.

The control signal and/or data being received from the second serial transceiver 295' may be stored in the storage 180' according to control of the controller 110'.

The first serial transceiver 195' may be separately provided from the main board 101' or integrally formed with the main board 101'.

The first serial transceiver 195' of FIG. 3B is substantially the same as the first serial transceiver 195 of FIG. 2B, and the same description will be omitted.

At least one of the components 110' to 195' of the control apparatus 100' illustrated in FIG. 3A may be added or omitted according to the performances of the control apparatus 100' and/or the display apparatus 200'. In addition, it will be easily understood by those of ordinary skilled in the art that the positions of the components 110' to 195' may be varied according to the performance or structure of the control apparatus 100' and/or the display apparatus 200'.

Referring to FIG. 3B, the display apparatus 200' includes the communication unit 230', the camera 245', the light receiver 250', the display 270', the speaker 276' and the second serial transceiver 295'.

The display apparatus 200' may include the display 270' and the second serial transceiver 295'. In addition, the display apparatus 200' may include a timing controller, a source driver board 296 (see FIG. 4A), a gate driver board, the display 270' and the second serial transceiver 295'.

The communication unit 230' may connect the display apparatus 200' to an external apparatus (e.g., a portable apparatus, a display apparatus or a server) according to control of the controller 110'. The communication unit 230' may be connected to the control apparatus 100' according to control of the controller 110'.

The communication unit 230' of FIG. 3B is substantially the same as the communication unit 230 of FIG. 2B, and the same description will be omitted.

The camera 245' receives a video (e.g., consecutive frames) corresponding to a user's motion including a gesture within a recognition range of the camera 245'. The user's motion may include movement of a part of a user's body, such as face movement, facial expression, hand movement, fist movement, and finger movement of the user.

The camera 245' of FIG. 3B is substantially the same as the camera 245 of FIG. 2B, and the same description will be omitted.

The light receiver 250' receives an infrared signal (including control information), which is output from the remote control apparatus, through a light window. The light receiver 250' may receive an infrared signal corresponding to a user's input (e.g., a touch, a pressing, a touch gesture, a voice or a motion) from the remote control apparatus. Control information may be extracted from the received infrared signal.

The display 270' of the display apparatus 200' displays a video including a broadcasting signal being received through the tuner 120' according to control of the controller 110'.

The received video may be received through the first serial transceiver 195', the cable 10' and the second serial transceiver 295' and displayed on the display 270' according to control of the controller 110'.

The display 270' of the display apparatus 200' may receive a video (e.g., a moving image) being input through the communication units 130' and 230' or the input/output unit 160' from the control apparatus 100' and display the received video according to control of the controller 110'. The display 270' of the display apparatus 200' may receive a video data stored in the storage 180' from the control apparatus 100' and output the received video according to control of the controller 110'.

The display 270' of FIG. 3B is substantially the same as the display 270' of FIG. 2B, and the same description will be omitted.

The speaker 276' outputs an audio included in the broadcasting signals received through the tuner 120' according to control of the controller 110' of the control apparatus 100'. The audio included in the broadcasting signals received through the tuner 120' may be received by the display apparatus 200' through the first serial transceiver 195', the cable 10' and the second serial transceiver 295', and output through the speaker 276' according to control of the controller 110'.

The speaker 276' of the display apparatus 200' may receive an audio (e.g., voice or sound) being input through the communication units 130' and 230' or the input/output unit 160' from the control apparatus 100', and output the received audio.

The speaker 276' may receive an audio stored in the storage 180' from the control apparatus 100' and output the received audio according to control of the controller 110' of the control apparatus 100'.

The speaker 276' of FIG. 3B is substantially the same as the speaker 276' of FIG. 2B, and the same description will be omitted.

The second serial transceiver 295' may receive power, control signals and/or data from the first serial transceiver 195' of the control apparatus 100' according to control of the controller no' of the control apparatus 100'. In addition, the second serial transceiver 295' may transmit a response corresponding to control of the power, control signals and/or data to the first serial transceiver 195' of the control apparatus 100' according to control of the controller 110' of the control apparatus 100'.

The second serial transceiver 295' may be integrally formed with or separately formed from the timing controller. The second serial transceiver 295' may convert a serial data transmitted at a high speed from the first serial transceiver 195' to a parallel data again.

The second serial transceiver 295' of FIG. 3B is substantially the same as the second serial transceiver 295' of FIG. 2B, and the same description will be omitted.

At least one of the components 230' to 295 of the display apparatus 200' illustrated in FIGS. 3A and 3B may be added or omitted according to the performances of the control apparatus 100' and/or the display apparatus 200'. In addition, it will be easily understood by those of ordinary skilled in the art that the positions of the components 230' to 295' may be varied according to the performance or structure of the control apparatus 100' and/or the display apparatus 200'.

FIG. 4A is an exploded perspective view schematically illustrating a display apparatus in accordance with an exemplary embodiment.

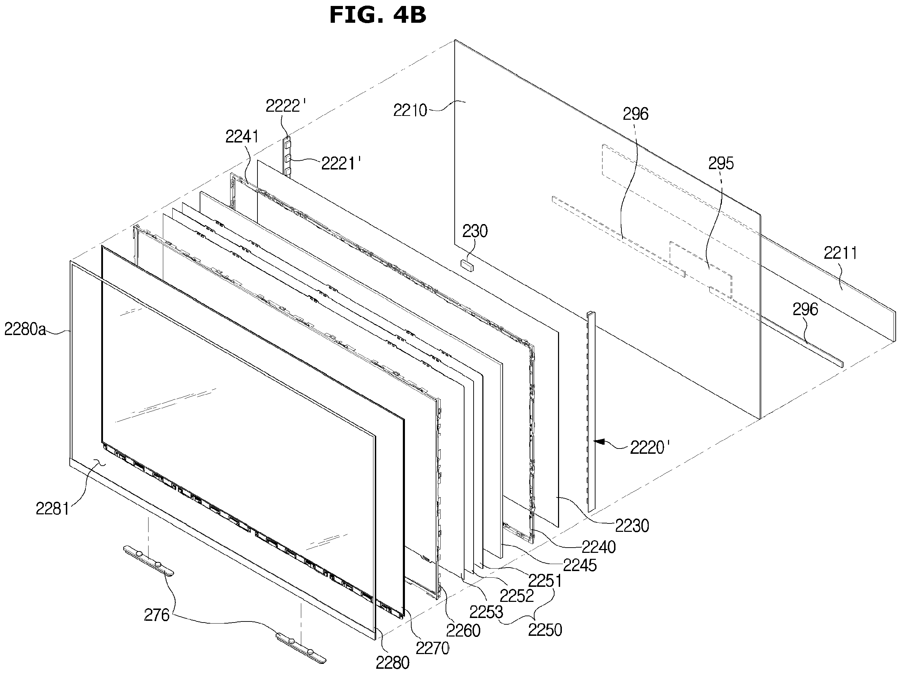

FIG. 4B is an exploded perspective view schematically illustrating a display apparatus in accordance with another exemplary embodiment.

Referring to FIG. 4A, the display apparatus 200 may include a bottom chassis 2210, a light source 2220, a reflective sheet 2230, a middle holder 2240, a diffusion plate 2245, an optical sheet 2250, a middle frame 2260, a display panel 2270 and a top chassis 2280.

When the display apparatus 200 may be provided as a curved display apparatus, at least one component among the bottom chassis 2210, the light source 2220, the reflective sheet 2230, the middle holder 2240, the diffusion plate 2245, the optical sheet 2250, the middle frame 2260, the display panel 2270 and the top chassis 2280 of the curved display apparatus 200 may have a curvature corresponding to a curvature of the curved display apparatus 200.

The light source 2220, the reflective sheet 2230, the diffusion plate 2245 and the optical sheet 2250 may be referred to as a backlight unit that provides light to the display panel 2270. In addition, components except for the bottom chassis 2210, the middle holder 2240, the middle frame 2260, the display panel 2270, the top chassis 2280 and one or more printed circuit boards (or driver board) may be referred to as a backlight unit.

Not only the light source 220 but also other components (e.g., the reflective sheet 2230, the middle holder 2240, the diffusion plate 2245, the optical sheet 2250 or the middle frame 2260) may be accommodated on a bottom of the bottom chassis 221.

The bottom chassis 2210 may be provided in the form of a many-sided plate having a high strength, including metal having less thermal deformation against heat emitted from the light source and/or the display panel 2270 accommodated in the bottom chassis 2210, for example, aluminum or an aluminum alloy. The metal may include light metal having a specific weight equal to or lower than 4, and may include nonferrous metal except for iron and an alloy having iron as a main component.

The bottom chassis 2210 may be molded using plastic (e.g., poly carbonate. In addition, the bottom chassis 2210 may be molded by adding glass fiber to plastic. It will be easily understood by those of ordinary skilled in the art that the material of the bottom chassis 2210 is provided as an example, and the present disclosure is not limited thereto as long as it can lead to the thickness of the display apparatus being reduced.

The light source 2220 is accommodated on the bottom of the bottom chassis 2210, and radiate light by power being supplied from the power supply 190 and 190'. In addition, the light source 2220 may be driven according to a driving signal of the light source driver 185 according to control of the controller 110. The light source 2220 may be turned on and off, or flash according to the driving signal.

The light source 2220 radiates light toward the display panel 2270 that is disposed at the front of the light source 2220 (e.g., in a +y axis direction), and serves as a backlight in the display apparatus 200. The light source 2220 may include a light emitting diode (LED) or a cold cathode fluorescent lamp (CCFL). In addition, the light source 2220 may include a lens.

On FIG. 4A, a light source of a direct type display apparatus is illustrated. The light source 2220 may include a set of LED bars 2222 each composed of a plurality of LEDs 2221. The LED bars 2222 may be spaced apart from each other inside the bottom chassis 2210 (e.g., on the bottom of the bottom chassis 2210). It will be easily understood by those of ordinary skilled in the art that the number of the LEDs 2221 included in the LED bar 2222 and the number of LED bars 2222 may be varied according to the size of the display panel 2270.

The plurality of LED bars 2222 may be electrically connected to the power supply 190 through the second serial transceiver 295 or 295', the cable 10 and the first serial transceiver 195 or 195'. In addition, the plurality of LED bars 2222 may be connected to the light source driver 185 or 185' through the second serial transceiver 295 or 295', the cable 10 and the first serial transceiver 195 or 195'.

On FIG. 4B, a light source of an edge type display apparatus is illustrated. A light source 2220' may include a set of LED bars 2222' each composed of a plurality of LEDs 2221'. The LED bars 2222' paired with each other may be disposed at two sides of the bottom chassis 2210, respectively (e.g., upper and lower sides or left and right sides of the bottom chassis 2210). In addition, the LED bar 2222' may be provided in a total of three or more LED bars. When the LED bars 2222' are provided in a total of four, the four LED bars 2222' may be disposed at four sides of the bottom chassis 2210 (e.g., upper, lower, left, and right sides).

The plurality of LED bars 2222' may be electrically connected to the power supply 190 through the second serial transceiver 295 or 295', the cable 10 and the first serial transceiver 195 or 195'. In addition, the plurality of LED bars 2222' may be connected to the light source driver 185 or 185' through the second serial transceiver 295 or 295', the cable 10 and the first serial transceiver 195 or 195'.

When the LED bar 2222' is disposed at one or more sides of the bottom chassis 2210, a light guide plate may be additionally provided on the bottom chassis 2210. Accordingly, light radiated from the light source 2220' may be uniformly guided to the display panel 2270. The light guide plate may include transparent plastic. A reflective plate may be provided between the light guide plate and the bottom chassis 2210.

When the display panel of the display apparatus is provided using an organic LED, the light source 2220 or 2220' may be omitted. In addition, when the display panel of the curved display apparatus is provided using an organic LED, the light source 2220 or 2220' may be omitted.

According to an exemplary embodiment, the light source 2220 may refer to a concept including the light source 2220 in a direct type display apparatus, and the light source 2220' in an edge type display apparatus. According to an exemplary embodiment, other components except for the light source 2220 (e.g., 2210, 2230...and 2290) may be used for the direct type display apparatus and the edge type display apparatus in common.

The reflective sheet 2230 allows light radiated from the light source 2220 to be introduced to the diffusion plate 2245 positioned to a side of the display panel 2270. In addition, the reflective sheet 2230 may allow light reflected from the diffusion plate 2245 to be introduced to the diffusion plate 2245 again.

In the direct type display apparatus, the reflective sheet 2230 may have a plurality of openings 2231 corresponding to protrusions of the plurality of light sources 2220 accommodated in the bottom chassis 2210. The plurality of LEDs 2221 protruded through the openings 2231 of the reflective sheet 2230 radiates light to the diffusion plate 2245.

In the edge type display apparatus, the reflective sheet 2230 allows light leaking from the light source 2220' provided at a lateral side of the bottom chassis to be reflected toward the light guide plate and the display panel 2270, thereby enhancing the light efficiency. The edge type display apparatus does not have an opening, different from the direct type display apparatus.

The reflective sheet 2230 may be coated with a high reflectivity coating agent having a color of white or silver (e.g., silver, TiO2). In addition, the reflective sheet 2230 may be provided in a total of two or more reflective sheets.

A supporter may be disposed on the reflective sheet 2230, to support the diffusion plate 2245 and /or the optical sheet 2250.

The support may include transparent material in consideration of the light efficiency of light radiated from the light source 2220. The supporter may include Polyethylene Terephthalate Glycol, Polyethylene, Polystyrene Paper, Polystyrene, polypropylene, Acrylonitrile Butadiene Styrene (ABS), or Polycarbonate.

The middle holder 2240 may support the diffusion plate 2245. In addition, the middle holder 2240 may support the optical sheet 2250 by using a plurality of middle holder protrusions protruded toward the display panel 2270.

The middle holder 2250 may be accommodated in a plurality of edges of the bottom chassis 2220 (e.g., four edges or three or less edges). Light radiated from the light source 2220 may be introduced to the diffusion plate 2245 and/or the optical sheet 2250 without interference with the middle holder 2240.

The middle holder 2240 may support the direct type reflective sheet 2230 that extends from the light source 2220.

The diffusion plate 2245 allows light below the diffusion plate 2245 to be uniformly diffused toward the display panel 2270. The diffusion plate 2245 allows light introduced from the direct type light source and the edge type light source to be uniformly introduced to the display panel 2270.

The diffusion plate 2245 may support the optical sheet 2250 provided on the diffusion plate 2245. The diffusion plate 2245 may allow introduced light to be uniformly diffused and then emitted to the optical sheet 2250.

The diffusion plate 2245 may include transparent material or non-transparent material. The diffusion plate 2245 may include acryl, urethane, epoxy, polyester, polyamide, polystyrene or polycarbonate

The optical sheet 2250 allows light introduced from the diffusion plate 2245 and having a uniform brightness to be introduced to the display panel 2270. The optical sheet 2250 may include a plurality of sheets 2251 to 2253 that overlap each other while interposing the middle holder protrusions protruded from the middle holder 2240 therebetween.

The optical sheets 2251 to 2253 may have grooves of optical sheet protrusions corresponding to the middle holder protrusions. The optical sheet 2250 may include a protective sheet, a prism sheet and/or a diffuser sheet.

It will be easily understood by those of ordinary skilled in the art that the above described number of the optical sheets 2250 is provided only as an example, and the optical sheet 2250 may be provided in one or more optical sheets or four more optical sheets.

The middle frame 2260 is provided below the display panel 2270, and supports the display panel 2270. In addition, the middle frame 2260, while supporting the display panel 2270, allows the display panel 2270 to be spaced apart from the optical sheet 2250 that is disposed below the display panel 2250.

The middle frame 2260 may include a middle frame protrusion to support the optical sheet 2250. In addition, the middle frame protrusion of the middle frame 2260 may support the optical sheet 2250 in cooperation with the middle holder protrusion of the middle holder 2240.

The middle frame 2260 may include acrylonitrile-butadiene-styrene (ABS) resin and/or glass fiber. In addition, the middle frame 2260 may include various plastic, resin and/or metal.

The display panel 2270 may include a thin film transistor (TFT) substrate and a liquid crystal display (LCD) panel. The display panel 2270 may include a substrate and an active matrix organic light emitting diodes (AMOLED) panel. In addition, the display panel 2270 may include a substrate and an organic light emitting diodes (OLED) panel. However, the configuration of the display panel 2270 is not limited thereto.

The display panel 2270 may include a polarization plate and/or a color filter at a front of the display panel 2270. The polarization plate and the color filter may be positioned in + y axis direction with respect to the display panel 2270.

A timing controller is provided adjacent to the bottom chassis 2210 to generate a driving signal corresponding to driving of the display panel 2270.

At a lateral side of the display panel 2270, the source driver board 296 may be disposed to receive a driving signal generated from the timing controller and to transmit the received driving signal to the display panel 2270. In addition, at the lateral side of the display panel 2270, the second serial transceiver 295 connected to the cable 10 connecting the display apparatus 200 to the control apparatus 100 may be disposed. The second serial transceiver 295 and the timing controller may be provided on the same printed circuit board.

The speaker 276 may be provided at a lower end of the display panel 2270. The speaker 276 may be provided at each side of the lower end of the display panel 2270. The speaker 276 may be provided at one of a lateral side and an upper end of the display panel 2270. In addition, the speaker 276 may be provided at both lateral sides of the display panel 2270 (e.g., a left side and a right side of the display panel 2270).

At one of the left side and the right side of the display panel 2270 or both of the left side and the right side of the display panel 2270, a gate driver board that transmits a driving signal received from the timing controller to the display panel 2270 may be disposed.

The display panel 2270 and the source driver board 296 may be electrically connected to each other by a chip-on-film. The display panel 2270 supported at the inside of the bottom chassis 2210 and the source driver board 296 located outside the bottom chassis 2210 may be electrically connected by the chip-on-film.

The source driver board 296 and a part of the chip-on-film that are located outside of the bottom chassis 2210 may be prevented from being exposed to the outside by the rear cover 2211.

The display panel 2270 supported at the inside of the bottom chassis 2210 and the source driver board 296 located at the inside of the bottom chassis 2210 may be electrically connected to each other by the chip-on-film.

The top chassis 2280 is coupled to the bottom chassis 2210 accommodating the components 2220 to 2270 of the display apparatus 100. The top chassis 2280 is disposed at a front of the display panel 2270, and is configured to prevent an external shock from being applied to the components 2220 to 2270 accommodated in the bottom chassis 2210 and/or prevent light radiated from the light source 2220 inside the bottom chassis 2210 from leaking to the outside (e.g., optical loss).

The top chassis 2280 may be formed along a periphery of the display panel 2270. The top chassis 2280 may have a cross section to cover an upper side periphery and lateral side peripheries of the display panel 2270. The top chassis 2280 includes an opening 2281. Front portions 2280a of four edges except for the opening 2281 of the top chassis 2280 may be referred to as "a bezel".

Contents being output from the display panel 2270 may be provided through the opening 2281. The opening 2281 may expose an active area and a portion of a black mask area of the display panel 2270. The portion of the black mask area may extend by 2 mm or less beyond an edge of the opening 2281 toward the center of the opening 2281.

Assuming that the display apparatus 200 is provided as a flat panel display apparatus, as the bezel 2280a of the top chassis 2280 has a narrower width, the flat panel display apparatus is reduced in weight and/or size. As the bezel 2280a has a narrower width, the flat panel display apparatus may display contents with higher degree of immersion. In addition, as the bezel 2280a has a narrower width, an actual screen area of the flat panel display apparatus provided to a user is increased in proportion to the reduction of the width of the bezel, compared to other display apparatus whose screen has the same size as the flat panel display apparatus.

Assuming that the display apparatus 200 is provided as a curved display apparatus, as the bezel 2280a of the top chassis 2280 has a narrower width, the curved display apparatus is reduced in weight and/or size. As the bezel 2280a has a narrower width, the curved display apparatus may display contents with higher degree of immersion is increased. The human retina is provided in a spherical shape and as the bezel 2280a has a narrower width, the curved display apparatus may display contents with lower degree of distortion. In addition, as the bezel 2280a has a narrower width, an actual screen area of the curved display apparatus provided to a user is increased in proportion to the reduction of the width of the bezel, compared to other display apparatus whose screen has the same size as the curved display apparatus.

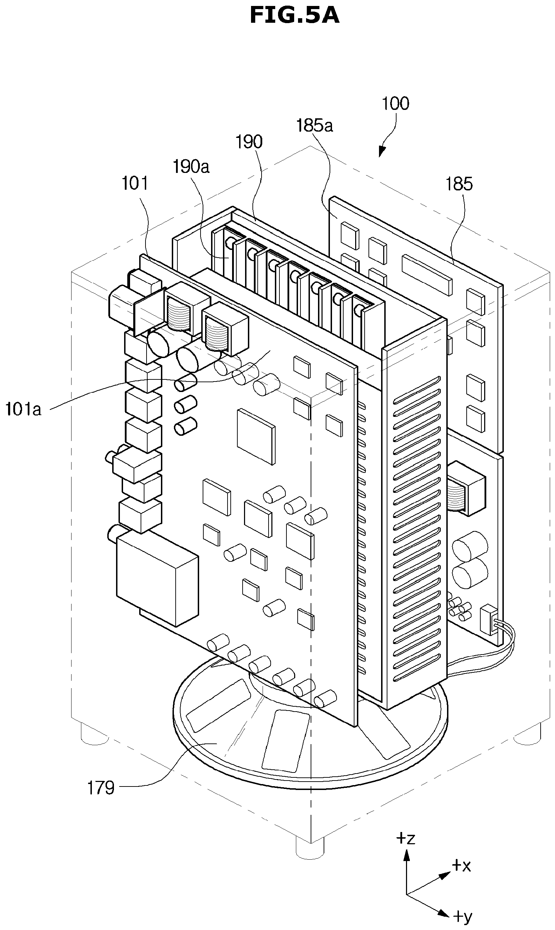

FIG. 5A is an inside perspective view schematically illustrating a control apparatus in accordance with an exemplary embodiment.

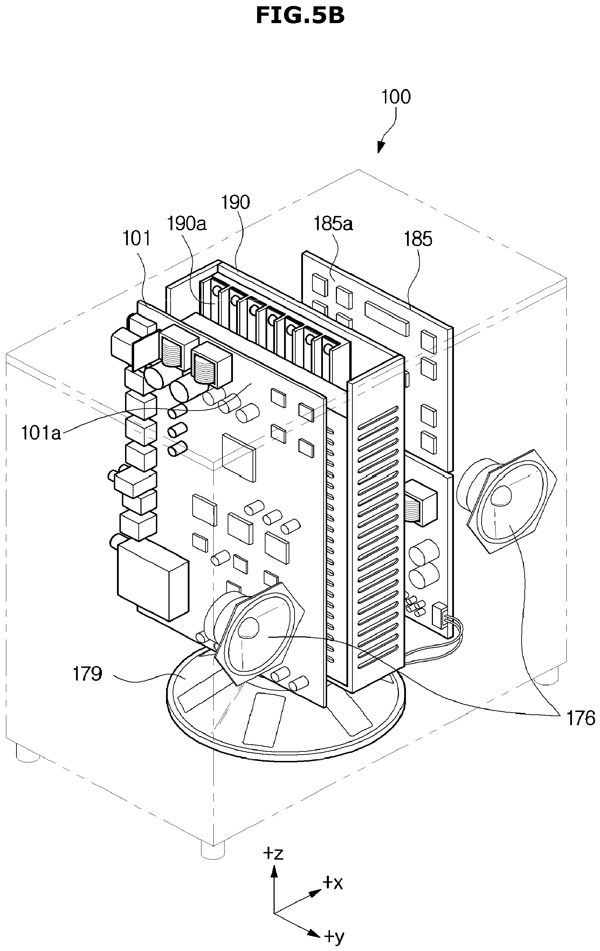

FIG. 5B is an inside perspective view schematically illustrating a control apparatus in accordance with another exemplary embodiment. FIGS. 5A and 5B schematically illustrate a control apparatus provided in the form of a hexahedron.

Referring to FIG. 5A, the control apparatus 100 for controlling the display apparatus 200 includes the main board 101, the woofer 179, the light source driver 185 and the power supply 190.

The first serial transceiver 195 may be separately formed from the main board 101, the woofer 179, the light source driver 185 and the power supply 190. In addition, the first serial transceiver 195 may be integrally formed with one of the main board 101, the woofer 179, the light source driver 185 and the power supply 190, for example, with the main board 101.

The main board 101, the light source driver 185, the power supply 190, the woofer 179 and the first serial transceiver 195 may be accommodated in a housing that forms an external appearance of the control apparatus 100, for example, in a hexahedron-shaped housing.

The control apparatus 100 may have a size of about 230 mm (width) x 170 mm (height) x 140 mm (depth) or less. In addition, the control apparatus 100 may have a size of about 210 mm (width) x 150 mm (height) x 130 (depth) or less.

The power supply 190 and the light source driver 185 are arranged in a consecutive order with respect to the main board 101. for example, in a +x axis direction). In addition, the woofer 179 may be provided at the right side of the light source driver 185. In addition, the woofer 179 may be disposed at a lower side of the main board 101, the power supply 190 and the light source driver 185, for example, in a -z axis direction).

The woofer 179 may be disposed at a lower side of the main board 101, the power supply 190 and the light source driver 185 (e.g., a side exposed through a bottom surface of the control apparatus 100), a upper side of the main board 101, the power supply 190 and the light source driver 185 (e.g., a side exposed through a top surface of the control apparatus 100), or a lateral side of the main board 101, the power supply 190 and the light source driver 185 (e.g., a side exposed through a side surface of the control apparatus 100).

The positions of the main board 101, the power supply 190, the light source driver 185 and the woofer 179 may be varied in the control apparatus 100. For example, the positions of the main board 101 and the power supply 190 may be varied. The positions of the main board 101 and the light source driver 185 may be varied. In addition, the positions of the power supply 190 and the woofer 179 may be varied.

It will be easily understood by those of ordinary skilled in the art that the change in position of the main board 101, the power supply 190, the light source driver 185 and the woofer 179 described above is provided as an example, and the present exemplary embodiment is not limited thereto.

The thicknesses of the main board 101 on which electronic parts (e.g., a resistor, a transistor and a condenser) are mounted, the power supply 190, the light source driver 185 and the woofer 179 may be different from each other, in which the thickness represents a height in +/- x axis directions reaching to the highest electronic part that stands on a substrate.

The thickness of each components (e.g., the thickness of each of the main board 101, the power supply 190, the woofer 179 and the light source driver 185) disposed in the control apparatus 100 in -z-axis direction may be measured with respect to a surface of a table (or a surface plate). For example, the thickness of the main board 101 may be 22 mm. In addition, the thickness of the main board 101 may be greater than 15 mm and less than 27 mm. The thickness of the power supply 190 may be 36.1 mm. In addition, the thickness of the power supply 190 may be greater than 25 mm and less than 41 mm.

The thickness of the woofer 179 may be 50 mm. In addition, the thickness of the woofer 179 may be greater than 35 mm and less than 60 mm. The thickness of the light source driver 185 may be 18.1 mm. In addition, the thickness of the light source driver 185 may be greater than 13 mm and less than 25 mm.

Among the components (e.g., the main board 101, the power supply 190, the light source driver 185 and the woofer 179) arranged in the control apparatus 100 in the gravity direction (e.g., -z axis direction), the woofer 179 may have the greatest thickness. The light source driver 185 may have the least thickness among the components (e.g., the main board 101, the power supply 190, the woofer 179 and the light source driver 185). The power supply 190 may have a thickness greater than the thickness of one of the main board 101 and the light source driver 185.

It will be easily understood by those of ordinary skilled in the art that the thicknesses of the main board 101, the power supply 190, the woofer 179 and the light source driver 185 are provided as an example, and the present exemplary embodiment is not limited thereto.

According to an exemplary embodiment, the components of the control apparatus 100 (e.g., the main board 101, the power supply 190, the light source driver 185 and the woofer 179) have a plan surface whose direction is parallel to the gravity direction (e.g., -z axis direction), crosses the gravity direction or is inclined clockwise at an angle with respect to the gravity direction (e.g., at an angle of 30°, that is adjusted at the time of a manufacturing). It will be easily understood by those of ordinary skilled in the art that modification of the angle of the components included in the control apparatus may be possible according to another exemplary embodiment.

The main board 101, the power supply 190, the light source driver 185 and the woofer 179 in the control apparatus 100 may be spaced apart from each other at different intervals.

When the woofer 179 is disposed at a lower side of the main board 101, the power supply 190 and the light source driver 185, for example, in the -z axis direction, the main board 101, the power supply 190 and the light source driver 185 may be spaced apart from each other at different intervals. In addition, the main board 101, the power supply 190 and the light source driver 185 may be spaced apart from the woofer 179 disposed at a lower side of the main board 101, the power supply 190 and the light source driver 185 at different intervals. The interval between the main board 101 and the power supply 190 may be 7 mm. In addition, the interval between the main board 101 and the power supply 190 may be greater than 3 mm and less than 11 mm. The interval between the power supply 190 and the light source driver 185 may be 4 mm. In addition, the interval between the power supply 190 and the light source driver 185 may be greater than 2 mm and less than 7 mm.

The interval between the main board 101, the power supply 190 and the light source driver 185, and the woofer 179 disposed at a lower side of the main board 101, the power supply 190 and the light source driver 185 may be 5 mm. In addition, the interval between the power supply 190 and the light source driver 185 and the woofer 179 disposed at a lower side of the main board 101, the power supply 190 and the light source driver 185 may be greater than 1.5 mm and less than 8 mm.

According to another exemplary embodiment, when the power supply 190, the light source driver 185 and the woofer 179 are consecutively arranged on the right side, for example, in the -x axis direction with respect to the main board 101, the main board 101, the power supply 190, the light source driver 185 and the woofer 179 may be spaced apart from each other at different intervals. For example, the interval between the main board 101 and the light source driver 185 may be 3 mm. In addition, the interval between the main board 101 and the light source driver 185 may be greater than 1 mm and less than 5 mm.

The interval between the light source driver 185 and the power supply 190 may be 7 mm. In addition, the interval between the light source driver 185 and the power supply 190 may be greater than 3 mm and less than 11 mm. The interval between the power supply 190 and the woofer 179 may be 4 mm. In addition, the interval between the power supply 190 and the woofer 179 may be greater than 2 mm and less than 7 mm.

The interval between a surface 190a of the power supply 190, from which a great amount of heat is generated, and any other component adjacent to the surface 190a (e.g., one of the main board 101, the light source driver 185 and the woofer 179) may be greatest. In addition, components facing the surface 190a and a rear surface of the power supply 190 may be spaced apart from the power supply 190 at a greater interval, compared to other components that do not face the surface 190a and the rear surface of the power supply 190.

The surface 190a of the power supply 190 may be disposed not to face a surface 101a of the main board 101 in the control apparatus 100. In addition, the surface 190a of the power supply 190 may be disposed not to face a surface 185a of the light source driver 185.

It will be easily understood by those of ordinary skilled in the art that the intervals among the main board 101, the light source driver 185, the power supply 190 and the woofer 179 may be provided as an example only, and may be not limited thereto.

When the woofer 179 is disposed at a lower side of the main board 101, the power supply 190 and the light source driver 185, for example, in -z axis direction, partitions may be provided among the main board 101, the power supply 190 and the light source driver 185. In addition, a partition may be provided between the main board 101, the power supply 190 and the light source driver 185 and the woofer 179 disposed at a lower side of the main board 101, the power supply 190 and the light source driver 185.

The partition may constraint heat transfer between the components in the control apparatus 100.

A partition may be provided between the main board 101 and the power supply 190. A partition may be provided between the power supply 190 and the light source driver 185. In addition, a partition may be provided between the main board 101, the power supply 190 and the light source driver 185, and the woofer 179 disposed at a lower side of the main board 101, the power supply 190 and the light source driver 185.

The respective partitions provided among the main board 101, the power supply 190 and the light source driver 185 in the control apparatus 100 may have thicknesses different from one another. For example, a partition provided between the main board 101 and the power supply 190 may have the greatest thickness compared to thicknesses of other partitions.

According to another exemplary embodiment, when the power supply 190, the light source driving unit 185 and the woofer 179 are arranged with respect to the main board 101 in a consecutive order (e.g., in +X axis direction), partitions may be provided among the main board 101, the light source driver 185, the power supply 190 and the woofer 179 in the control apparatus 100. A partition may be provided between the main board 101 and the light source driver 185. A partition may be provided between the light source driver 185 and the power supply 190. In addition, a partition may be provided between the power supply 190 and the woofer 179.

The respective partitions provided among the main board 101, the light source driver 185, the power supply 190 and the woofer 179 in the control apparatus 100 may have thicknesses different from one another. For example, a partition provided between the light source driver 185 and the power supply 190 may have the greatest thickness compared to other partitions.

The control apparatus 100 is provided at one side thereof with the port unit 100a. The port unit 100a may be provided at one side of the main board 101. In addition, a direction of the surface 101a of the main board 101 (e.g., -x axis direction) may be different from a direction of one of a cone and a dust cap of the woofer 179 (e.g., -z axis direction). An angle between a direction of the surface 101a of the main board 101 and a direction of one of the cone and the dust cap of the woofer 179 may be 90°, 180° or 270°.

The control apparatus 100 is provided at one side thereof with a ventilating opening 100b. In addition, a direction of the ventilating opening 100b (e.g., -y axis direction in FIG. 1B) may be different from a direction of one of the cone and the dust cap of the woofer 179 (e.g., -z axis direction). An angle between a direction of the ventilating opening 100b and a direction of one of the cone and the dust cap of the woofer 179 may be 90°, 180° or 270°.

It will be easily understood by those of ordinary skilled in the art that the angles described above are provided as an example, and the present embodiment is not limited thereto.

Referring to FIG. 5B, the control apparatus 100 includes the main board 101, the speaker 176, the woofer 179, the light source driver 185 and the power supply 190. Compared to FIG. 5A, the control apparatus 100 of FIG. 5B further includes the speaker 176.

The first serial transceiver 195 may be separately formed from the main board 101, the speaker 176, the woofer 179, the light source driver 185 and the power supply 190 of the control apparatus 100. In addition, the first serial transceiver 195 may be integrally formed with one of the main board 101, the speaker 176, the woofer 179, the light source driver 185 and the power supply 190, for example, the first serial transceiver 195 may be integrally formed with the main board 101.

In FIG. 5B, the main board 101, the speaker 176, the woofer 179, the light source driver 185 and the power supply 190 of the control apparatus 100 except for the speaker 176 is substantially the same as the main board 101, the woofer 179, the light source driver 185 and the power supply 190, and the same description will be omitted.

The speaker 176 in the control apparatus 100 may be disposed at an outside of other components (e.g., the main board 101, the speaker 176, the woofer 179, the light source driver 185 and the power supply 190), for example, disposed outside with respect to a center portion of the control apparatus 100). The speaker 176 in the control apparatus 100 may be provided on at least one of a front side, a left side, a right side, an upper side, a bottom side and a rear side of the control apparatus 100.

The speakers 176 may be provided in one or more thereof. By using the one or more speakers 176 and the woofer 179, a user may be provided with various audio output effects (e.g., a concert site effect, an orchestra hall effect).

When two speakers 176 are provided in the control apparatus 100, the woofer 179 may be provided between the two speakers 176 in the control apparatus 100. The two speakers 176 may be provided in a direction different from a direction of the woofer 179. For example, an angle between the two speakers 176 and a direction of the woofer 179 may be 90°, 180° and 270°, for example. In addition, the two speakers 176 may be provided in the same direction as that of the woofer 179.

Other components (e.g., the main board 101, the light source driver 185 and the power supply 190) may be provided between the plurality of speakers 176 and the woofer 179 in the control apparatus 100. For example, the position of the speaker 176 and the position of the woofer 179 of the control apparatus 100 may be disposed in consideration of sound interference between the speaker 176 and the woofer 179. In addition, the position of the speaker 176 and the position of the woofer 179 of the control apparatus 100 may be disposed in consideration of sound interference among other components (e.g., the main board 101, the light source driver 185 and the power supply 190).

According to the exemplary embodiment, when the speaker 176 and the woofer 179 are included in the control apparatus 100, the speaker 276 may be included in the display apparatus 200. When the speaker 176 and the woofer 179 are included in the control apparatus 100, the speaker 276 may be omitted from the display apparatus 200.

When only the speaker 176 is included in the control apparatus 100, the speaker 276 may be included in the display apparatus 200. When only the speaker 176 is included in the control apparatus 100, the speaker 276 and the woofer may be included in the display apparatus 200. In addition, when only the speaker 176 is included in the control apparatus 100, the speaker 276 may not be included in the display apparatus 200.

When the speaker 176 is provided in the control apparatus 100, and the speaker 276 is provided in the display apparatus 200, a user may be provided with various sound effects. In addition, the control apparatus 100 includes the speaker 176 and the woofer 179, and the display apparatus 200 includes the speaker 276, a user may be provided with a different sound effect due to the woofer 179 that is added.

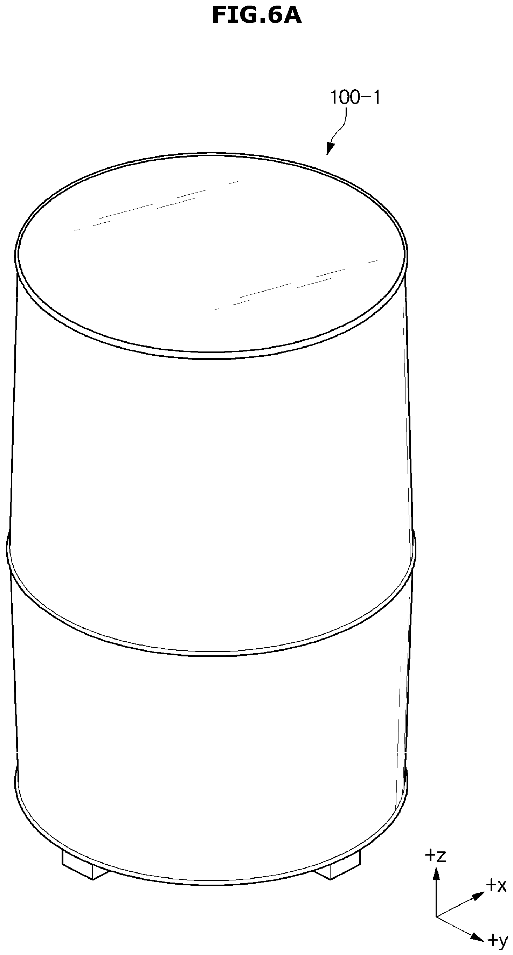

FIG. 6A is a perspective view schematically illustrating a control apparatus in accordance with another exemplary embodiment.

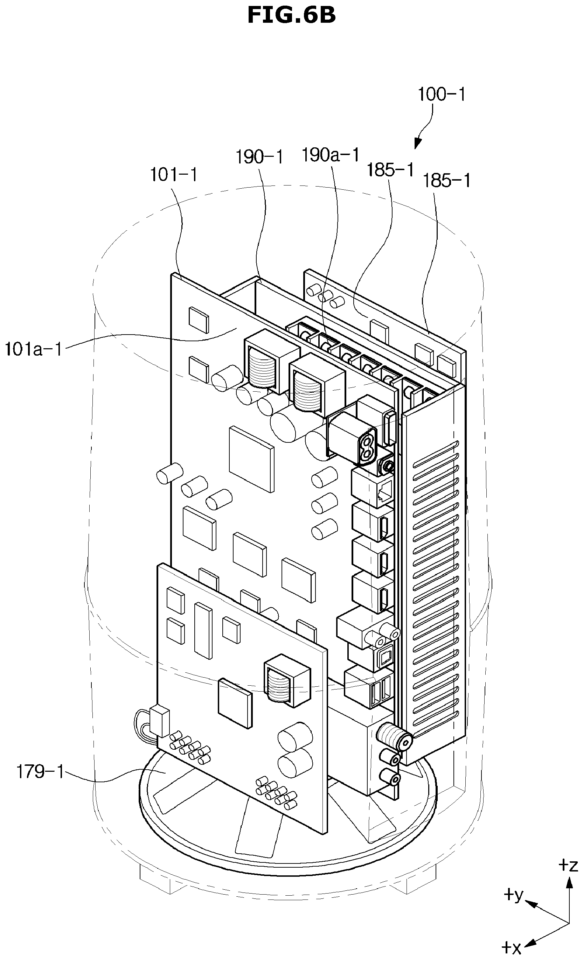

FIG. 6B is an inside perspective view schematically illustrating a control apparatus in accordance with another exemplary embodiment. FIGS. 6A and 6B schematically illustrate a control apparatus provided in the form of a cylinder.

Referring to FIGS. 6A and 6B, a control apparatus 100-1 is provided in the form of a cylinder. In addition, the control apparatus 100-1 may be provided in the form of a cylinder in which a middle portion between two bottom surfaces of the cylinder (a lower surface and a upper surface of the cylinder) is convex with a diameter (e.g., 171 mm) greater than a diameter of the two bottom surfaces (e.g., 160 mm). In addition, the control apparatus 100-1 may be provided in the form of a cylinder in which a middle portion between two bottom surfaces of the cylinder is concave with a diameter less than a diameter of the two bottom surfaces.

The control apparatus 100-1 may include a main board 101-1, a power supply 190-1, a light source driver 185-1 and a woofer 179-1. A first serial transceiver may be separately formed from the main board 101-1, the power supply 190-1, the light source driver 185-1 and the woofer 179-1. In addition, the first serial transceiver may be integrally formed with one of the main board 101-1, the power supply 190-1, the light source driver 185-1 and the woofer 179-1, for example, integrally formed with the main board 101-1.

The main board 101-1, the power supply 190-1, the light source driver 185-1 and the woofer 179-1 may be accommodated in a housing that forms an external appearance of the control apparatus 100-1, for example, in a cylindrical housing.

The control apparatus 100-1 provided in the form of a cylinder may have a diameter of 160 mm and a height of 275 mm. In addition, the control apparatus 100-1 may have a size of 140 mm and a height of 250 mm or below.

In the control apparatus 100-1, the power supply 190-1 and the light source driver 185-1 are consecutively arranged to the right side (e.g., in +X axis direction) with respect to the main board 101-1. The woofer 179-1 may be provided below the main board 101-1, the power supply 190-1 and the light source driver 185-1 (e.g., -z axis direction). In addition, the woofer 179-1 may be provided at the left side of the main board 101-1.

The woofer 179-1 may be disposed at a lower side of the main board 101-1, the power supply 190-1 and the light source driver 185-1 (e.g., a side exposed through a bottom surface of the control apparatus 100-1), a upper side of the main board 101-1, the power supply 190-1 and the light source driver 185-1 (e.g., a side exposed through a top surface of the control apparatus 100-1) or a lateral side of the main board 101-1, the power supply 190-1 and the light source driver 185-1 (e.g., a side exposed through a side surface of the control apparatus 100-1).

The positions of the main board 101-1, the power supply 190-1 and the light source driver 185-1 may be varied in the control apparatus 100-1. For example, the positions of the main board 101-1 and the power supply 190-1 may be varied. The light source driver 185-1 having a size less than those of other components may be provided distant away from the center portion of the cylindrical control apparatus 100-1 (e.g., may be provided adjacent to a surface of the cylinder).

It will be easily understood by those of ordinary skilled in the art that the change in the positions of the main board 101-1, the power supply 190-1, the light source driver 185-1 and the woofer 179-1 is provided as an example, and the present exemplary embodiment is not limited thereto.

The thicknesses of the main board 101-1 on which electronic parts (e.g., a resistor, a transistor and a condenser) are mounted, the power supply 190-1, the light source driver 185-1 and the woofer 179-1 may be different from each other, in which the thickness is defined in +/- x axis directions.

The thicknesses of the components provided in the gravity direction in the control apparatus 100-1 (e.g., -z axis direction) may be measured with the components lying down with respect to a surface of a table (or a surface plate).

The thickness of the main board 101-1 may be 20 mm. In addition, the thickness of the main board 101-1 may be greater than 15 mm and less than 27 mm. The thickness of the power supply 190-1 may be 36.0 mm. In addition, the thickness of the power supply 190-1 may be greater than 25 mm and less than 41 mm.

The thickness of the woofer 179-1 may be 50 mm. In addition, the thickness of the woofer 179-1 may be greater than 35 mm and less than 60 mm. The thickness of the light source driver 185-1 may be 18.0 mm. In addition, the thickness of the light source driver 185-1 may be greater than 13 mm and less than 25 mm.

Among the components provided in the gravity direction in the control apparatus 100-1 (e.g., -z axis direction), the woofer 179-1 may have the largest thickness. The light source driver 185-1 may have the least thickness among the components of the control apparatus 100-1. The power supply 190-1 may have a thickness greater than one of the thicknesses of the main board 101-1 and the light source driver 185-1.

It will be easily understood by those of ordinary skilled in the art that the thicknesses of the main board 101-1, the power supply 190-1, the woofer 179-1 and the light source driver 185-1 are provided as an example, and the present exemplary embodiment is not limited thereto.

In the control apparatus 100-1, a width of the main board 101-1 (corresponding to a diameter of the control apparatus 100-1) may be different from widths of the power supply 190-1 and the light source driver 185-1. The widths of the main board 101-1, the power supply 190-1 and the light source driver 185-1 are less than the width of the control apparatus 100-1.

The widths of the main board 101-1, the power supply 190-1 and the light source driver 185-1 are less than the width of the control apparatus 100-1 that passes through the center of the control apparatus 100-1. For example, the width of the main board 101-1 adjacent to the diameter passing through the center of the control apparatus 100-1 may be greater than the width of the light source driver 185-1 adjacent to the surface of the control apparatus 100-1.

The main board 101-1, the power supply 190-1, the woofer 179-1 and the light source driver 185-1 in the control apparatus 100-1 may be spaced apart from each other at different intervals.

The interval between the main board 101-1 and the power supply 190-1 may be 6 mm. In addition, the interval between the main board 101-1 and the power supply 190-1 may be greater than 2 mm and less than 10 mm. The interval between the power supply 190-1 and the light source driver 185-1 may be 3 mm. In addition, the interval between the power supply 190-1 and the light source driver 185-1 may be greater than 2 mm and less than 6 mm.

The interval between the main board 101-1, the power supply 190-1 and the light source driver 185-1, and the woofer 179-1 disposed at a lower side of the main board 101-1, the power supply 190-1 and the light source driver 185-1 may 6 mm. In addition, the interval between the main board 101-1, the power supply 190-1, the light source driver 185-1, and the woofer 179-1 disposed at a lower side of the main board 101-1, the power supply 190-1 and the light source driver 185-1 may be greater than 4 mm and less than 14 mm.

According to another exemplary embodiment, when the power supply 190-1, the light source driver 185-1 and the woofer 179-1 are consecutively arranged on the right side, for example, in the -x axis direction with respect to the main board 101-1, the main board 101-1, the power supply 190-1, the light source driver 185-1 and the woofer 179-1 may be spaced apart from each other at different intervals. For example, the interval between the main board 101-1 and the power supply 190-1 may be 8 mm. In addition, the interval between the main board 101-1 and the power supply 190-1 may be greater than 4 mm and less than 9 mm.

The interval between the power supply 190-1 and the light source driver 185-1 may be 6.5 mm. In addition, the interval between the power supply 190-1 and the light source driver 185-1 may be may be greater than 2.5 mm and less than 10.5 mm. The interval between the light source driver 185-1 and the woofer 179-1 may be 4.5 mm. In addition, the interval between the light source driver 185-1 and the woofer 179-1 may be greater than 2.5 mm and less than 6.5 mm.

The interval between a surface 190a-1 of the power supply 190-1, from which a great amount of heat is generated, and any other component (e.g., the main board 101-1, the light source driver 185-1 and the woofer 179-1) that faces the surface 190a-1 of the power supply 190-1 may be greatest.

When the woofer 179-1 is disposed at a lower side of the main board 101-1, the power supply 190-1 and the light source driver 185-1, for example, in the -z axis direction, the main board 101-1, the power supply 190-1 and the light source driver 185-1 may be spaced apart from each other at different intervals. In addition, the main board 101-1, the power supply 190-1 and the light source driver 185-1 may be spaced apart from the woofer 179-1 disposed at a lower side of the main board 101-1, the power supply 190-1 and the light source driver 185-1 at different intervals.

In the control apparatus 100-1, a surface 101a-1 of the main board 101-1 may be disposed not to face the surface 190a-1 of the power supply 190-1 from which a great amount of heat is generated. In addition, a surface 185a-1 of the light source driver 185-1 may be disposed not to face the surface 190a-1 of the power supply 190-1.

It will be easily understood by those of ordinary skilled in the art that the intervals among the main board 101-1, the power supply 190-1, the woofer 179-1 and the light source driver 185-1 may be provided as an example, and may be not limited thereto.

When the woofer 179-1 is disposed at a lower side of the main board 101-1, the power supply 190-1 and the light source driver 185-1, for example, in the -z axis direction, partitions may be provided among the main board 101-1, the power supply 190-1 and the light source driver 185-1. In addition, a partition may be provided between the main board 101-1, the power supply 190-1, and the light source driver 185-1 and the woofer 179-1 disposed at a lower side of the main board 101-1, the power supply 190-1 and the light source driver 185-1.

The partition may constraint heat transfer between the components in the control apparatus 100-1.

A partition may be provided between the main board 101-1 and the power supply 190-1. A partition may be provided between the power supply 190-1 and the light source driver 185-1. In addition, a partition may be provided between the main board 101-1, the power supply 190-1 and the light source driver 185-1, and the woofer 179-1 disposed at a lower side of the main board 101-1, the power supply 190-1 and the light source driver 185-1.

The respective partitions provided among the main board 101-1, the power supply 190-1 and the light source driver 185-1 in the control apparatus 100-1 may have thicknesses different from one another. For example, a partition provided between the main board 101-1 and the power supply 190-1 may have the greatest thickness compared to other partitions.

According to another exemplary embodiment, when the power supply 190-1, the light source driver 185-1 and the woofer 179-1 are arranged to the right side with respect to the main board 101 in a consecutive order (e.g., in +X axis direction), partitions may be provided among the main board 101-1, the light source driver 185-1, the power supply 190-1 and the woofer 179-1 in the control apparatus 100-1.

A partition may be provided between the main board 101-1 and the light source driver 185-1. A partition may be provided between the light source driver 185-1 and the power supply 190-1. In addition, a partition may be provided between the power supply 190-1 and the woofer 179-1.

The respective partitions provided among the main board 101-1, the light source driver 185-1, the power supply 190-1 and the woofer 179-1 in the control apparatus 100-1 may have thicknesses different from one another. For example, a partition provided between the light source driver 185-1 and the power supply 190-1 may have the greatest thickness compared to other partitions.

The control apparatus 100-1 having a cylindrical shape is provided with the port unit exposed through a surface of the control apparatus 100-1. For example, the port unit may be disposed on a circumferential side of the control apparatus 100-1 illustrated in FIG. 1B. In addition, a direction of the surface 101a-1 of the main board 101-1 (e.g., -x axis direction) may be different from a direction of one of a cone and a dust cap of the woofer 179-1. An angle between a direction of the port unit 100a and a direction of the woofer 179-1 (e.g., one of +z axis direction and -z axis direction) may be 90°, 180° or 270°.

The ventilating opening 100b (see FIG. 1B) may be exposed through a surface of the control apparatus 100-1.

A speaker may be exposed through the surface of the control apparatus 100-1 having a cylindrical shape. The speaker provided on the surface of the control apparatus 100-1 may be substantially the same as the speaker 176 of FIG. 4B (e.g., with the control apparatus having a different shape), and the same description will be omitted.

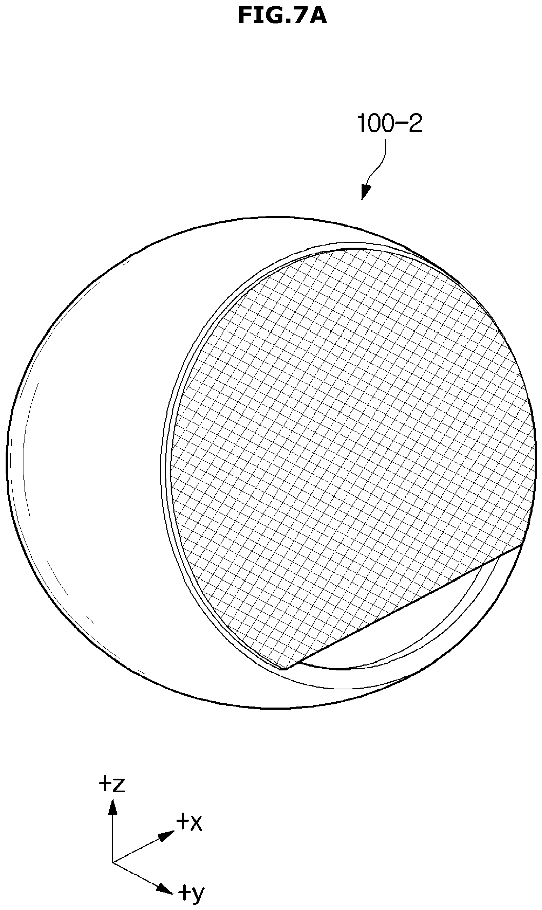

FIG. 7A is a perspective view schematically illustrating a control apparatus in accordance with another exemplary embodiment.

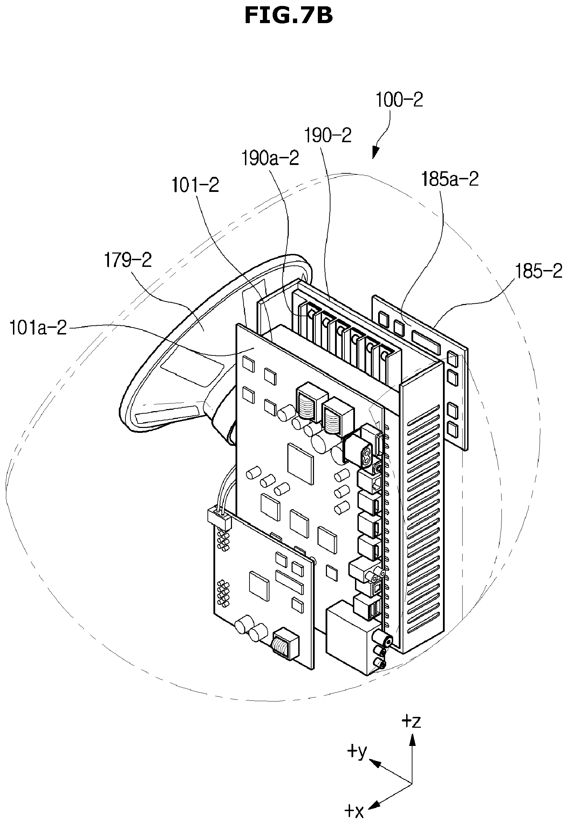

FIG. 7B is an inside perspective view schematically illustrating a control apparatus in accordance with another exemplary embodiment. FIGS. 7A and 7B schematically illustrate a control apparatus provided in the form of a sphere.

Referring to FIGS. 7A and 7B, a control apparatus 100-2 is provided in the form of a sphere. In addition, the control apparatus 100-2 is provided in the form of an ellipse other than a sphere.

The control apparatus 100-2 may include a main board 101-2, a power supply 190-2, a light source driver 185-2 and a woofer 179-2. A first serial transceiver may be separately formed from the main board 101-2, the power supply 190-2, the light source driver 185-2 and the woofer 179-2. In addition, the first serial transceiver may be integrally formed with one of the main board 101-2, the power supply 190-2, the light source driver 185-2 and the woofer 179-2 (e.g., integrally formed with the main board 101-2).

The control apparatus 100-1 provided in the form of a sphere may have a diameter less than or equal to 250 mm. In addition, the control apparatus 100-2 may have a diameter that is grater than 150 mm and less than 300 mm.

In the control apparatus 100-2, the power supply 190-2 and the light source driver 185-2 are consecutively arranged on the right side with respect to the main board 101-2, for example, in the -x axis direction. The woofer 179-2 may be provided in the +y axis direction in the control apparatus 100-2. One of a cone and a dust cap of the woofer 179-2 may be exposed through the spherical surface.

The positions of the main board 101-2, the power supply 190-2 and the light source driver 185-2 may be varied in the control apparatus 100-2. For example, the positions of the main board 101-2 and the power supply 190-2 may be varied. The light source driver 185-2 having a size less than those of other components may be provided distant away from the center portion of the spherical control apparatus 100-2. For example, the light source driver 185-2 may be provided adjacent to a surface of the sphere.

It will be easily understood by those of ordinary skilled in the art that the change in the positions of the power supply 190-2 and the light source driver 185-2 is provided as an example, and the present exemplary embodiment is not limited thereto.

The thicknesses of the main board 101-2 on which electronic parts (e.g., a resistor, a transistor and a condenser) are mounted, the power supply 190-2 and the light source driver 185-2 may be different from each other, in which the thickness is defined in +/- x axis directions.

The thicknesses of the components provided in the gravity direction in the control apparatus 100-2 (e.g., -z axis direction) may be measured with the components lying down with respect to a surface of a table (or a surface plate).

The thickness of the main board 101-2 may be 22 mm. In addition, the thickness of the main board 101-2 may be greater than 16 mm and less than 25 mm. The thickness of the power supply 190-2 may be 37 mm. In addition, the thickness of the power supply 190-2 may be greater than 26 mm and less than 42 mm.

The thickness of the woofer 179-2 may be 55 mm. In addition, the thickness of the woofer 179-2 may be greater than 30 mm and less than 60 mm. The thickness of the light source driver 185-2 may be 16 mm. In addition, the thickness of the light source driver 185-2 may be greater than 12 mm and less than 19 mm.

Among the components provided in the gravity direction in the control apparatus 100-2 (e.g., -z axis direction), the woofer 179-2 may have the greatest thickness. The light source driver 185-2 may have the smallest thickness among the components of the control apparatus 100-2. The power supply 190-2 may have a thickness greater than the thickness of one of the main board 101-2 and the light source driver 185-2.

It will be easily understood by those of ordinary skilled in the art that the thicknesses of the main board 101-2, the power supply 190-2, the woofer 179-2 and the light source driver 185-2 are provided as an example, and the present exemplary embodiment is not limited thereto.

A width of the main board 101-2 of the spherical control apparatus 100-2 (corresponding to a diameter of the control apparatus 100-2) may be different from widths of the power supply 190-2 and the light source driver 185-2. The widths of the main board 101-2, the power supply 190-2 and the light source driver 185-2 are less than the width of the control apparatus 100-2.

The main board 101-2, the power supply 190-2, and the light source driver 185-2 in the control apparatus 100-2 may be spaced apart from each other at different intervals. The interval between the main board 101-2 and the power supply 190-2 may be 6 mm. In addition, the interval between the main board 101-2 and the power supply 190-2 may be greater than 2 mm and less than 10 mm. The interval between the power supply 190-2 and the light source driver 185-2 may be 3 mm. In addition, the interval between the power supply 190-2 and the light source driver 185-2 may be greater than 2 mm and less than 6 mm.

The interval between the main board 101-2, the power supply 190-2 and the light source driver 185-2, and the woofer 179-2 disposed at a lateral side of the main board 101-2, the power supply 190-2 and the light source driver 185-2 (e.g., disposed in a direction oriented toward the surface of the sphere) may 10 mm. In addition, the interval between the main board 101-2, the power supply 190-2 and the light source driver 185-2, and the woofer 179-2 disposed at a lateral side of the main board 101-2, the power supply 190-2 and the light source driver 185-2 may be greater than 4 mm and less than 20 mm.

According to another exemplary embodiment, when the power supply 190-2, the light source driver 185-2, and the woofer 179-2 are consecutively arranged on the right side, for example, in the -x axis direction with respect to the main board 101-2, the main board 101-2, the power supply 190-2, the light source driver 185-2 and the woofer 179-2 may be spaced apart from each other at different intervals. For example, the interval between the main board 101-2 and the power supply 190-2 may be 7 mm. In addition, the interval between the main board 101-2 and the power supply 190-2 may be greater than 3.5 mm and less than 9.5 mm.

The interval between the power supply 190-2 and the light source driver 185-2 may be 6.5 mm. In addition, the interval between the power supply 190-2 and the light source driver 185-2 may be greater than 3 mm and less than 9.5 mm. The interval between the light source driver 185-2 and the woofer 179-2 may be 4.5 mm. In addition, the interval between the light source driver 185-2 and the woofer 179-2 may be greater than 2.5 mm and less than 6.5 mm.

The interval between a surface 190a-2 of the power supply 190-2, from which a great amount of heat is generated, and any other component (e.g., the main board 101-2, the light source driver 185-2 and the woofer 179-2) that faces the surface 190a-2 may be greatest. The surface 190a-2 of the power supply 190-2 may be disposed not to face a surface 185a-2 of the light source driver 185-2.

It will be easily understood by those of ordinary skilled in the art that the intervals among the main board 101-2, the power supply 190-2, and the light source driver 185-2 may be provided as an example, and may be not limited thereto.

When the woofer 179-2 is disposed at a lateral side of the main board 101-2, the power supply 190-2 and the light source driver 185-2, partitions may be provided among the main board 101-2, the power supply 190-1 and the light source driver 185-1. In addition, a partition may be provided between the main board 101-2, the power supply 190-2 and the light source driver 185-2, and the woofer 179-2 disposed at a lower side of the main board 101-2, the power supply 190-2 and the light source driver 185-2.

The partition may constraint heat transfer between the components in the control apparatus 100-2.

A partition may be provided between the main board 101-2 and the power supply 190-2. A partition may be provided between the power supply 190-2 and the light source driver 185-2. In addition, a partition may be provided between the main board 101-2, the power supply 190-2 and the light source driver 185-2, and the woofer 179-2 disposed at a lower side of the main board 101-2, the power supply 190-2 and the light source driver 185-2.

The respective partitions provided among the main board 101-2, the power supply 190-2 and the light source driver 185-2 in the control apparatus 100-2 may have thicknesses different from one another. For example, a partition provided between the main board 101-2 and the power supply 190-2 may have the greatest thickness compared to other partitions.

The control apparatus 100-1 having a spherical shape is provided with the port unit (e.g., provided to a circumference side of the control apparatus 100-2) exposed through a surface of the control apparatus 100-2. In addition, a direction of the surface 101a-2 of the main board 101-2 (e.g., +x axis direction) may be different from a direction of one of a cone and a dust cap of the woofer 179-2. An angle between a direction of the port unit 100a and a direction of the woofer 179-2 (e.g., +y axis direction) may be 90°, 180° or 270°.

The ventilating opening 100b (see FIG. 1B) may be positioned at a side surface of the control apparatus 100-2.

A speaker may be provided at a side surface of the control apparatus 100-2 (e.g., at the surface of the sphere).

The speaker provided at a side surface of the control apparatus 100-2 (e.g., at the surface of the sphere) may be substantially the same as the speaker 176 of FIG. 4B, and the same description will be omitted.

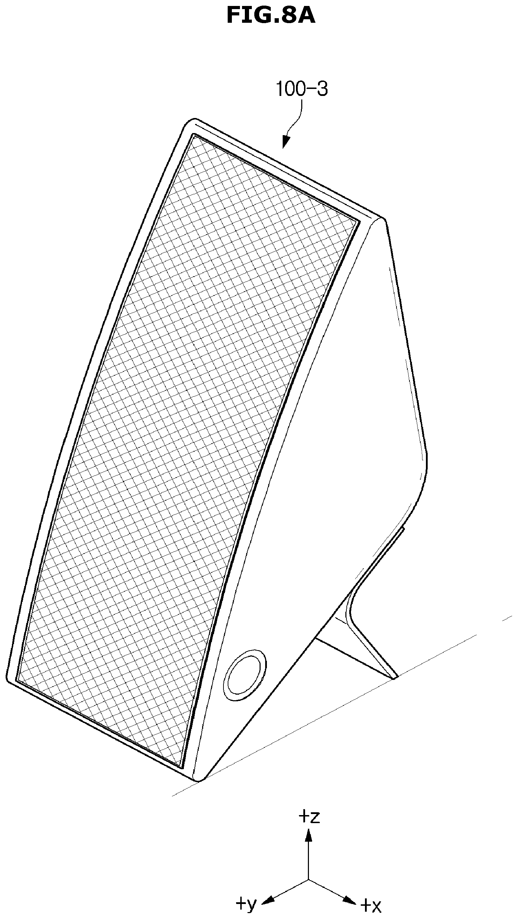

FIG. 8A is a perspective view schematically illustrating a control apparatus in accordance with another exemplary embodiment.

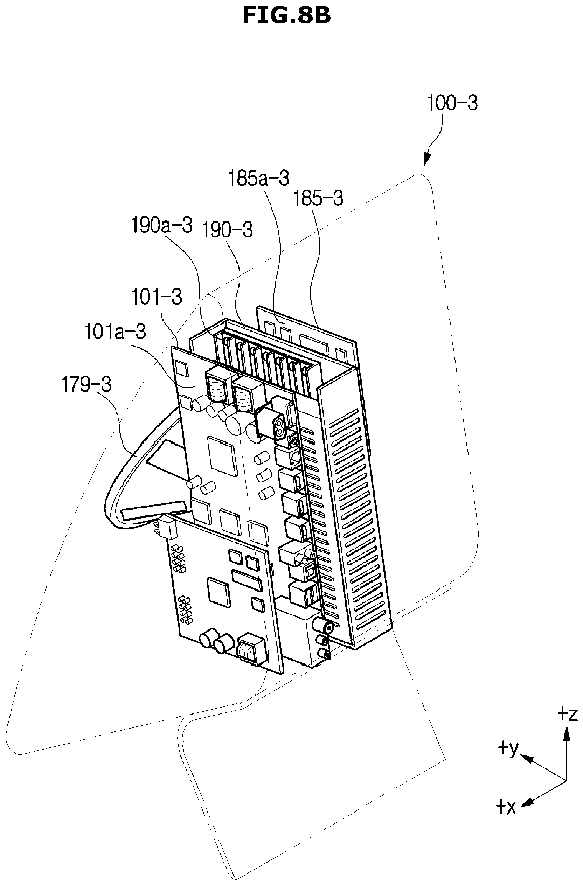

FIG. 8B is an inside perspective view schematically illustrating a control apparatus in accordance with another exemplary embodiment. FIGS. 8A and 8B schematically illustrate a control apparatus provided in the form of a triangular prism.

Referring to FIGS. 8A and 8B, a control apparatus 100-3 is provided in the form of a triangular prism. In addition, corners of the control apparatus 100-3 may be subject to a rounding process. A direction of the bottom surface of the control apparatus 100-3 having a triangular prism shape may be perpendicular to the gravity direction (e.g., +/- x axis directions).

The control apparatus 100-3 may include a main board 101-3, a power supply 190-3, a light source driver 185-3 and a woofer 179-3. A first serial transceiver may be separately formed from the main board 101-3, the power supply 190-3, the light source driver 185-3 and the woofer 179-3. In addition, the first serial transceiver may be integrally formed with one of the main board 101-3, the power supply 190-3 and the light source driver 185-3 (e.g., integrally formed with the main board 101-3).

The control apparatus 100-3 having a triangular prim shape may have a size in which one side of the triangle has a length of 250 mm or less and a height of 160 mm of less. In addition, the control apparatus 100-3 may have a size in which one side of the triangle has a length of 200 mm or less and a height of 150 or less.

In the control apparatus 100-3, the power supply 190-3 and the light source driver 185-3 are consecutively arranged with respect to the main board 101-3 to the right side, for example, in the -x axis direction). The woofer 179-3 may be provided in the +y axis direction in the control apparatus 100-3. One of a cone and a dust cap of the woofer 179-3 may be exposed through a surface of one side of the triangular prism.

The positions of the main board 101-3, the power supply 190-3 and the light source driver 185-3 may be varied in the control apparatus 100-3. For example, the positions of the main board 101-3 and the power supply 190-3 may be varied. The light source driver 185-3 may be provided distant away from the center portion of the triangular prim shaped control apparatus 100-3. For example, the light source driver 185-3 may be provided adjacent to a side surface of the triangular prim.

It will be easily understood by those of ordinary skilled in the art that the change in the positions of the main board 101-3, the power supply 190-3, and the light source driver 185-3 is provided as an example, and the present exemplary embodiment is not limited thereto.

The thicknesses of the main board 101-3, on which electronic parts (e.g., a resistor, a transistor and a condenser) are mounted, the power supply 190-3 and the light source driver 185-3 may be different from each other, in which the thickness is defined in +/- x axis directions.

The thicknesses of the components provided in the gravity direction in the control apparatus 100-3 (e.g., -z axis direction) may be measured with the components lying down with respect to a surface of a table (or a surface plate).

The thickness of the main board 101-3 may be 23 mm. In addition, the thickness of the main board 101-3 may be greater than 15 mm and less than 26 mm. The thickness of the power supply 190-3 may be 36 mm. In addition, the thickness of the power supply 190-3 may be greater than 24 mm and less than 41 mm.

The thickness of the woofer 179-3 may be 55 mm. In addition, the thickness of the woofer 179-3 may be greater than 30 mm and less than 60 mm. The thickness of the light source driver 185-3 may be 16 mm. In addition, the thickness of the light source driver 185-3 may be greater than 11 mm and less than 18 mm.

Among the components provided in the gravity direction in the control apparatus 100-3 (e.g., -z axis direction), the woofer 179-3 may have the greatest thickness. The light source driver 185-3 may have the smallest thickness among the components of the control apparatus 100-3. The power supply 190-3 may have a thickness greater than one of the thicknesses of the main board 101-3 and the light source driver 185-3.

It will be easily understood by those of ordinary skilled in the art that the thicknesses of the main board 101-3, the power supply 190-3, the woofer 179-3 and the light source driver 185-3 are provided as an example, and the present exemplary embodiment is not limited thereto.

The main board 101-3, the power supply 190-3, and the light source driver 185-3 in the control apparatus 100-3 may be spaced apart from each other at different intervals.

The interval between a surface 190a-3 of the power supply 190-3, from which a great amount of heat is generated, and any other component (e.g., the main board 101-3 and the light source driver 185-3) adjacent to the surface 190a -3 may be greatest.

The surface 190a-3 of the power supply 190-3 in the control apparatus 100-3 may be disposed not to face a surface 101a-3 of the main board 101-3. In addition, the surface 190a-3 of the power supply 190-3 may be disposed not to face a surface 185a-3 of the light source driver 185-3.

It will be easily understood by those of ordinary skilled in the art that the intervals among the main board 101-3, the power supply 190-3, and the light source driver 185-3 may be provided as an example, and may be not limited thereto.

In the control apparatus 100-3 provided in the form of a triangular prism, a width of the main board 101-3 (corresponding to the height of the control apparatus 100-3), a width of the power supply 190-3 and a width of the light source driver 185-3 may be different from each other. The width of the main board 101-3, the width of the power supply 190-3 and the width of the light source driver 185-3 are less than the height of the control apparatus 100-3.

The main board 101-3, the power supply 190-3, and the light source driver 185-3 in the control apparatus 100-3 may be spaced apart from each other at different intervals. The interval between the main board 101-3 and the power supply 190-3 may be 5.5 mm. In addition, the interval between the main board 101-3 and the power supply 190-3 may be greater than 2.5 mm and less than 9.5 mm. The interval between the power supply 190-3 and the light source driver 185-3 may be 3.5 mm. In addition, the interval between the power supply 190-3 and the light source driver 185-3 may be greater than 2 mm and less than 6.5 mm.

The interval between the main board 101-3, the power supply 190-3 and the light source driver 185-3, and the woofer 179-3 disposed at a lateral side (e.g., at a side corresponding to the height of the triangular prism) of the main board 101-3, the power supply 190-3 and the light source driver 185-3 may 5 mm. In addition, the interval between the main board 101-3, the power supply 190-3 and the light source driver 185-3, and the woofer 179-3 disposed at a lateral side of the main board 101-3, the power supply 190-3 and the light source driver 185-3 may be greater than 3 mm and less than 17 mm.

According to another exemplary embodiment, when the power supply 190-3, the light source driver 185-3, and the woofer 179-3 are consecutively arranged to a lateral side of the triangular prism with respect to the main board 101-3, for example, when a direction of a surface of the main board 101-3, a direction of a surface of the power supply 190-3, a direction of a surface of the light source driver 185-3 and a direction of a surface of the woofer 179-3 are the same, the power supply 190-3, the light source driver 185-3 and the woofer 179-3 may be spaced apart from each other at different intervals. For example, the interval between the main board 101-3 and the power supply 190-3 may be 6.5 mm. In addition, the interval between the main board 101-3 and the power supply 190-3 may be greater than 3.2 mm and less than 9.8 mm.

The interval between the power supply 190-3 and the light source driver 185-3 may be 6.8 mm. In addition, the interval between the power supply 190-3 and the light source driver 185-3 may be may be greater than 3.5 mm and less than 9.8 mm. The interval between the light source driver 185-3 and the woofer 179-3 may be 4.8 mm. In addition, the interval between the light source driver 185-3 and the woofer 179-3 may be greater than 2.8 mm and less than 6.8 mm.

The interval between the surface 190a-3 of the power supply 190-3, from which a great amount of heat is generated, and any other component (e.g., the main board 101-3, the light source driver 185-3 and the woofer 179-3) that faces the surface 190a-3 may be greatest. The surface 190a-3 of the power supply 190-3 may be disposed not to face a surface 185a-3 of the light source driver 185-3.

It will be easily understood by those of ordinary skilled in the art that the intervals among the main board 101-3, the power supply 190-3, and the light source driver 185-3 may be provided as an example, and may be not limited thereto.

When the woofer 179-3 is disposed at a lateral side (at a side corresponding to the height of the triangular prism) of the main board 101-3, the power supply 190-3 and the light source driver 185-3, partitions may be provided among the main board 101-3, the power supply 190-3 and the light source driver 185-3. In addition, a partition may be provided between the main board 101-3, the power supply 190-3, and the light source driver 185-3 and the woofer 179-3 disposed at a lower side of the main board 101-3, the power supply 190 and the light source driver 185-3.

The partition may constraint heat transfer between the components in the control apparatus 100-3.

A partition may be provided between the main board 101-3 and the power supply 190-3. A partition may be provided between the power supply 190-3 and the light source driver 185-3. In addition, a partition may be provided between the main board 101-3, the power supply 190-3 and the light source driver 185-3, and the woofer 179-3 disposed at a lower side of the main board 101-3, the power supply 190-3 and the light source driver 185-3.

The respective partitions provided among the main board 101-3, the power supply 190-3 and the light source driver 185-3 in the control apparatus 100-3 may have thicknesses different from one another. For example, a partition provided between the main board 101-3 and the power supply 190-3 may have the greatest thickness compared to thicknesses of other partitions.

The control apparatus 100-3 having a triangular prism shape is provided with the port unit 100a (see FIG. 1B) exposed through a surface of the control apparatus 100-3. In addition, a direction of the surface 101a-3 of the main board 101-3 (e.g., +x axis direction) may be different from a direction of one of a cone and a dust cap of the woofer 179-3. An angle between a direction of the port unit 100a and a direction of the woofer 179-3 may be 90°, 180° or 270°. One of the direction of the port unit 100a and the direction of the woofer 179-3 may correspond to the +y axis direction.

The ventilating opening 100b (see FIG. 1B) may be positioned at a side of the control apparatus 100-3.

A speaker may be provided at a side surface of the control apparatus 100-3.

The speaker provided at a side surface of the control apparatus 100-3 may be substantially the same as the speaker 176 of FIG. 5B, and the same description will be omitted.

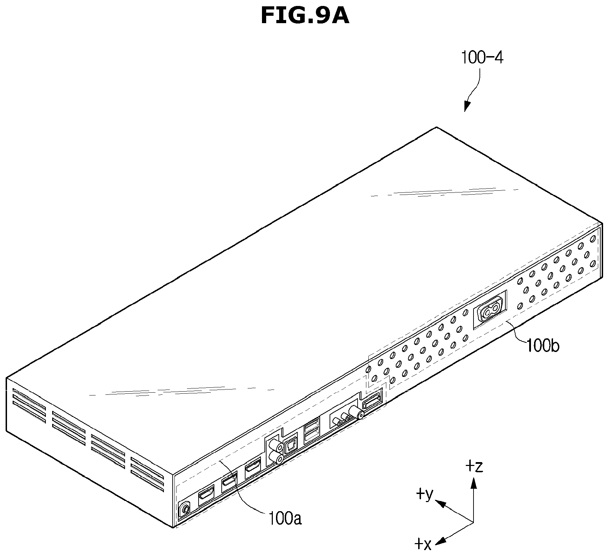

FIG. 9A is a perspective view schematically illustrating a control apparatus in accordance with another exemplary embodiment.

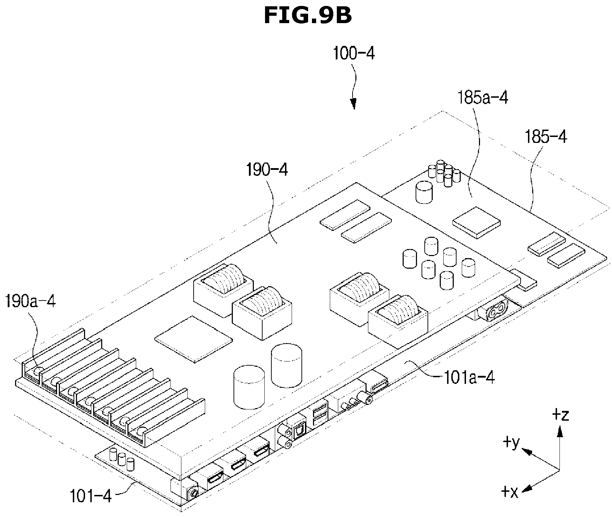

FIG. 9B is an inside perspective view schematically illustrating a control apparatus in accordance with another exemplary embodiment.

FIGS. 9A and 9B schematically illustrate a control apparatus provided in the form of a hexahedron. Referring to FIGS. 9A and 9B, a control apparatus 100-4 for controlling the display apparatus 200 may include a main board 101-4, a light source driver 185-4, and a power supply 190-4.

A first serial transceiver may be separately formed from the main board 101-4, the light source driver 185-4 and the power supply 190-4 of the control apparatus 100-4. In addition, the first serial transceiver may be integrally formed with at least one of the main board 101-4, the light source driver 185-4 and the power supply 190-4.

The main board 101-4, the light source driver 185-4, the power supply 190-4 and the first serial transceiver may be accommodated in a housing that forms an external appearance of the control apparatus 100-4, for example, in a hexahedron housing.

The control apparatus 100-4 may have a size of about 390 mm X 150 mm X 50 mm or below (e.g., width X length X height). In addition, the control apparatus 100-4 may have a size of about 350 mm X 120 mm X 47 mm or below (e.g., width X length X height).

In the control apparatus 100-4, the light source driver 185-4 is provided at a right side of the main board 101-4. A direction of a surface 101a-4 of the main board 101-4 and a direction of a surface 185a-1 of the light source driver 185-4 may be the same (e.g., +z axis direction). The main board 101-4 and the light source driver 185-4 may come into contact with each other, or may be spaced apart from each other.

The main board 101-4 may have an area greater than that of the light source driver 185-4. For example, the main board 101-4 may have an area that is 2.5 times greater than that of the light source driver 185-4.

The surface 101a-4 of the main board 101-4 may face a surface 190a-4 of the power supply 190-4. A direction of the surface 101a-4 of the main board 101-4 (e.g., +z axis direction) may be opposite to a direction of the surface 190a-4 of the power supply 190-4 (e.g., -z axis direction). The main board 101-4 may have an area less than or equal to that of the power supply 190-4.

The power supply 190-4 may have an area greater than that of the light source driver 185-4. The power supply 190-4 may have an area that is 2.5 times greater than that of the light source driver 185-4.

The positions of the main board 101-4, the power supply 190-4 and the light source driver 185-4 may be varied in the control apparatus 100-4. For example, the positions of the main board 101-4 and the power supply 190-4 may be varied. The positions of the main board 101-4 and the light source driver 185-4 may be varied.

It will be easily understood by those of ordinary skilled in the art that the change in the positions of the main board 101-4, the power supply 190-4, and the light source driver 185-4 is provided as an example, and the present exemplary embodiment is not limited thereto.

The thicknesses of the main board 101-4, on which electronic parts (e.g., a resistor, a transistor and a condenser) are mounted, the power supply 190-4 and the light source driver 185-4 may be different from each other, in which the thickness is defined in +/- z axis directions.

The thicknesses of the components that are provided in the control apparatus 100-4 so as to cross the gravity direction (e.g., +/-x axis directions) may be measured with the components lying down with respect to a surface of a table (or a surface plate).

The thickness of the main board 101-4 may be 15 mm. In addition, the thickness of the main board 101-4 may be greater than 12 mm and less than 25 mm. The thickness of the power supply 190-4 may be 32.0 mm. In addition, the thickness of the power supply 190-4 may be greater than 20 mm and less than 35 mm.

The thickness of the light source driver 185-4 may be 12.0 mm. In addition, the thickness of the light source driver 185-4 may be greater than 10 mm and less than 18 mm.

Among the components arranged in the gravity direction in the control apparatus 100-4 (e.g., -z axis direction), the power supply 190-4 may have the greatest thickness. The light source driver 185-4 may have the smallest thickness among the components of the control apparatus 100-4. The power supply 190-4 may have a thickness greater than one of the thicknesses of the main board 101-4 and the light source driver 185-4.

It will be easily understood by those of ordinary skilled in the art that the thicknesses of the main board 101-4, the power supply 190-4, and the light source driver 185-4 are provided as an example, and the present exemplary embodiment is not limited thereto.

A width of the main board 101-4 of the control apparatus 100-4 (corresponding to a width of the control apparatus 100-4) may be different from widths of the power supply 190-4 and the light source driver 185-4. The widths of the main board 101-4, the power supply 190-4 and the light source driver 185-4 are less than the width of the control apparatus 100-4.

The width of the power supply 190-4 may be greater than one of the widths of the main board 101-4 and the light source driver 185-4.

The main board 101-4, the power supply 190-4, and the light source driver 185-4 in the control apparatus 100-4 may be spaced apart from each other at different intervals.

The interval between the main board 101-4 and the power supply 190-4 may be 3 mm. The interval between the main board 101-4 and the power supply 190-4 may be greater than 2 mm and less than 7 mm.

It will be easily understood by those of ordinary skilled in the art that the intervals among the main board 101-4, the power supply 190-4, and the light source driver 185-4 may be provided as an example, and may be not limited thereto.

In addition, partitions may be provided between the main board 101-4, the power supply 190-4, and the light source driver. A partition may be provided between the main board 101-4 and the power supply 190-4. In addition, partitions may be provided among the main board 101-4, the power supply 190-4 and the light source driver 185-4 that are provided to face one another while disposed on one above the other.

The partition may constraint heat transfer between the components in the control apparatus 100-4.

The respective partitions provided among the main board 101-4, the light source driver 185-4, the power supply 190-4 and a woofer in the control apparatus 100-4 may have thicknesses different from one another. For example, a partition provided between the main board 101-4 and the power supply 190-4 may have a thickness greater than that of a partition between the main board 101-4 and the light source driver 185-4.

The control apparatus 100-4 having a hexahedron shape is provided with the port unit 100a exposed through a surface of the control apparatus 100-4. The ventilating opening 100b may be exposed through a surface of the control apparatus 100-4.

A speaker may be provided so as to be exposed through a surface of the control apparatus 100-4. The speaker provided on the surface of the control apparatus 100-4 is substantially the same as the speaker 176 of FIG. 5B, (e.g., with the control apparatus having a different shape) and the same description will be omitted.

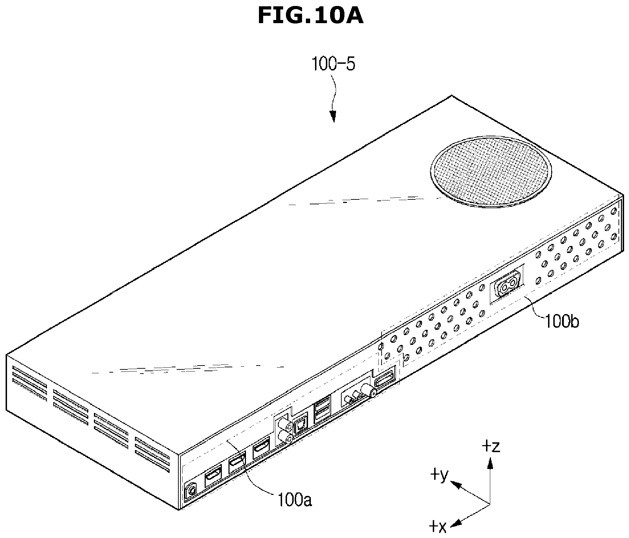

FIG. 10A is a perspective view schematically illustrating a control apparatus in accordance with another exemplary embodiment.

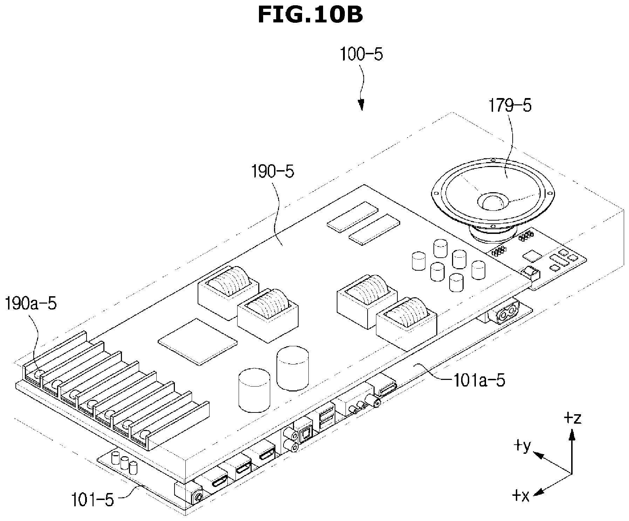

FIG. 10B is an inside perspective view schematically illustrating a control apparatus in accordance with another exemplary embodiment.

FIGS. 10A and 10B schematically illustrate a control apparatus provided in the form of a hexahedron. Referring to FIGS. 10A and 10B, a control apparatus 100-5 for controlling the display apparatus 200 may include a main board 101-5, a power supply 190-5, and a woofer 179-5. A light source driver that is omitted compared to the description of FIGS. 9A and 9b may be provided as a separate apparatus including the display apparatus 200 and the light source driver.

A first serial transceiver may be separately formed from the main board 101-5, the power supply 190-5 and the woofer 179-5 of the control apparatus 100-5. In addition, the first serial transceiver may be integrally formed with one of the main board 101-5 and the power supply 190-5 (e.g., integrally formed with the main board 101-5).

The main board 101-5, the power supply 190-5, the woofer 179-5 and the first serial transceiver may be accommodated in a housing that forms an external appearance of the control apparatus 100-5 (e.g., in a hexahedron housing).

The control apparatus 100-5 may have a size of about 430 mm (width) × 150 mm (height) × 50 mm (depth) or less. Alternatively, the control apparatus 100-5 may have a size of about 400 mm (width) × 120 mm (height) × 47.5 mm (depth) or less.

In the control apparatus 100-5, the woofer 179-5 is provided at a right side of the main board 101-5. A direction of a surface 101a-5 of the main board 101-5 and a direction of the woofer 179-5 may be the same direction (e.g., +z axis direction). The main board 101-5 and the woofer 179-5 may come into contact with each other, or may be spaced apart from each other.

The main board 101-5 may have an area greater than that of the woofer 179-5. For example, the main board 101-5 may have an area that is over 2 times greater than that of the woofer 179-5.

The surface 101a-5 of the main board 101-4 may face a surface 190a-5 of the power supply 190-5. A direction of the surface 101a-5 of the main board 101-5 (e.g., +z axis direction) may be opposite to a direction of the surface 190a-5 of the power supply 190-5 (e.g., -z axis direction). The main board 101-5 may have an area less than or equal to that of the power supply 190-5.

The power supply 190-5 may have an area greater than that of the woofer 185-5. For example, the power supply 190-5 may have an area that is over 2 times greater than that of the woofer 179-5.

The positions of the main board 101-5, the power supply 190-5 and the woofer 179-5 may be varied in the control apparatus 100-5. For example, the positions of the main board 101-5 and the power supply 190-5 may be varied. The position of the main board 101-5 and the woofer 179-5 may be changed.

It will be easily understood by those of ordinary skilled in the art that the change in the positions of the main board 101-5 the power supply 190-5, and the woofer 179-5 is provided as an example, and the present exemplary embodiment is not limited thereto.

The thicknesses of the main board 101-5, on which electronic parts (e.g., a resistor, a transistor and a condenser) are mounted, the power supply 190-5 and the woofer 179-5 may be different from each other, in which the thickness is defined in +/- z axis directions.

The thicknesses of the components provided to cross the gravity direction in the control apparatus 100-5 (e.g., +/-x axis directions) may be measured with the components lying down with respect to a surface of a table (or a surface plate).

The thickness of the main board 101-5 may be 15 mm. In addition, the thickness of the main board 101-5 may be greater than 12 mm and less than 20 mm. The thickness of the power supply 190-5 may be 32.0 mm. In addition, the thickness of the power supply 190-5 may be greater than 20 mm and less than 34 mm.

The thickness of the woofer 179-5 may be 45.0 mm. In addition, the thickness of the woofer 179-5 may be greater than 32 mm and less than 46 mm.

Among the components arranged in the gravity direction in the control apparatus 100-5 (e.g., -z axis direction), the woofer 179-5 may have the greatest thickness. The main board 101-5 may have the least thickness among the components.

It will be easily understood by those of ordinary skilled in the art that the thicknesses of the main board 101-5, the power supply 190-5, and the woofer 179-5 are provided as an example, and the present exemplary embodiment is not limited thereto.

A width of the main board 101-5 (corresponding to a width of the control apparatus 100-5), a width of the power supply 190-5 and a width of the woofer 179-5 may be different from each other. The width of the main board 101-5, the width of the power supply 190-5 and the width of the woofer 179-5 are less than the width of the control apparatus 100-5.

The width of the power supply 190-5 may be greater than one of the width of the main 101-5 and the width of the woofer 179-5.

The main board 101-5, the power supply 190-5, and the woofer 179-5 in the control apparatus 100-5 may be spaced apart from each other at different intervals.

The interval between the main board 101-5 and the power supply 190-5 may be 3 mm. The interval between the main board 101-5 and the power supply 190-5 may be greater than 2.5 mm and less than 7.5 mm

The interval between the main board 101-5 and the power supply 190-5 may be provided as an example, and may be not limited thereto.

In addition, partitions may be provided between the main board 101-5, the power supply 190-5, and the woofer 179-5. A partition may be provided between the main board 101-5 and the power supply 190-5. In addition, partitions may be provided among the main board 101-5, the power supply 190-5 and the woofer 179-5 that are provided on one above the other.

The partition may constraint heat transfer between the components in the control apparatus 100-5.

The respective partitions provided among the main board 101-5, the power supply 190-5 and the woofer 179-5 in the control apparatus 100-5 may have thicknesses different from one another. For example, a partition provided between the main board 101-5 and the power supply 190-5 may have a thickness greater than that of a partition between the main board 101-4 and the woofer 179-5.

The control apparatus 100-5 having a hexahedron shape is provided with the port unit 100a that is exposed through a surface of the control apparatus 100-5. The ventilating opening 100b may be exposed through a surface of the control apparatus 100-5.

A speaker may be exposed through a surface of the control apparatus 100-5. The speaker provided on the surface of the control apparatus 100-5 is substantially the same as the speaker 176 of FIG. 5B, and the same description will be omitted.

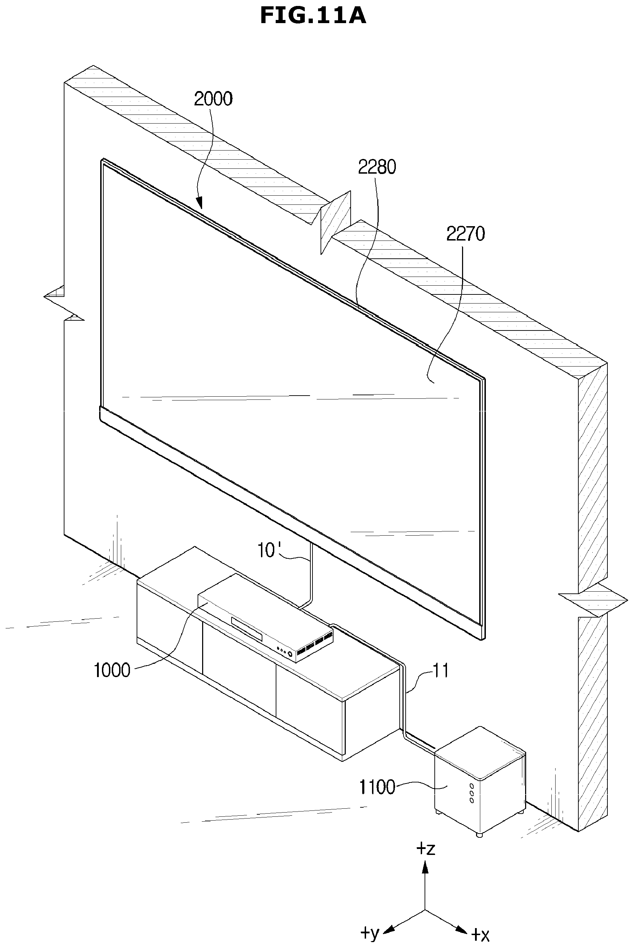

FIG. 11A is a front perspective view schematically illustrating a display apparatus and a control apparatus in accordance with an exemplary embodiment.

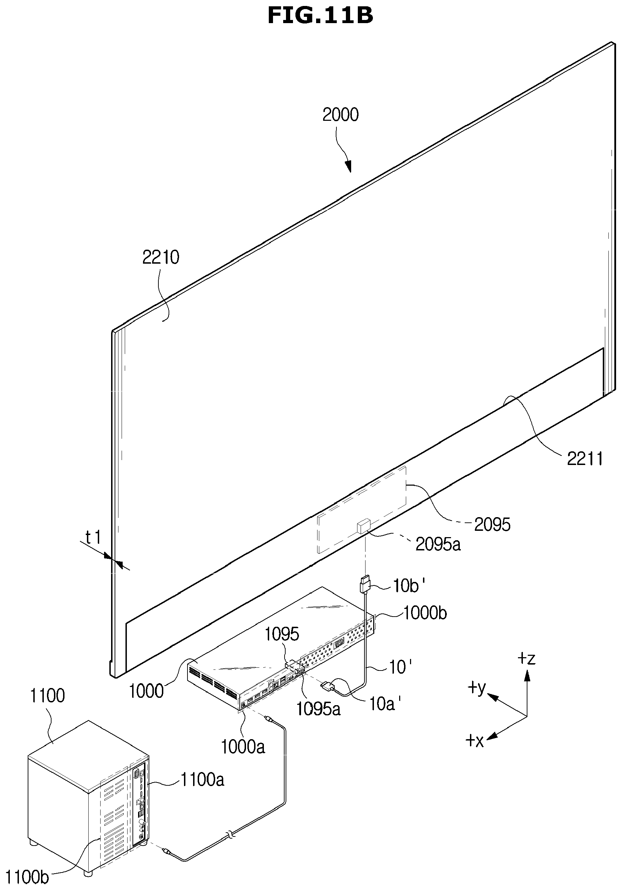

FIG. 11B is a rear-side perspective view schematically illustrating a display apparatus and a control apparatus in accordance with an exemplary embodiment.

Referring to FIGS. 11A and 11B, a display apparatus 2000 is fixed to a wall (e.g., in -y axis direction) using a wall mount unit in consideration of a watching distance and a watching height. In addition, the display apparatus 200 may be supported by a stand.

The display apparatus 2000 may include a display panel 2270 that displays contents and a bottom chassis 2210 and a top chassis 2280 that support the display panel 2270. In addition, the display apparatus 2000 may include other various components (see FIGS. 2 to 4B) in addition to the above described components.

A size and/or shape of components included in the display apparatus 2000 is subject to change in proportion to the decreasing thickness of the display apparatus 2000. In addition, a size and/or shape of components included in the display apparatus 2000 is also subject to change in proportion to the decreasing width of the bezel 2280a of the top chassis 2280 of the display apparatus 2000.

A control apparatus 1000 may be provided at one side of the display apparatus 2000 so as to be connected to the display apparatus 2000 using a cable 10', the control apparatus 1000 configured to control the display apparatus 2000. A power supply apparatus 1100 may be provided at one side of the display apparatus 2000 to be connected to the control apparatus 1000 through the cable 11, the power supply apparatus 1100 configured to supply the display apparatus 2000 and the control apparatus 1000 with power.

The components 101, 179, 185 and 190 of the control apparatus 100 of FIGS. 1A to 3B may be divided into a plurality of apparatuses (e.g., the control apparatus 1000 and the power supply apparatus 1100). The power supply apparatus 1100 may be connected only to the control apparatus 1000 through the cable 11. In addition, the power supply apparatus 1100 may be connected to the control apparatus 1000 and the display apparatus 2000 through a plurality of cables.

The control apparatus 1000 is connected to the display apparatus 2000 through the cable 10' and is connected to the power supply apparatus 1100 through the cable 11.

When the display apparatus 2000 connected to the control apparatus 1000 using the cable 10' is fixed to a wall by a wall mount unit, a lower end of the display apparatus 2000 may be fixed at a position higher than a lower end of the control apparatus 1000 (e.g., a bottom surface). In addition, the lower end of the display apparatus 2000 may be fixed at a position higher than a lower end of the power supply apparatus 1100 (e.g., a bottom surface).

When the display apparatus 2000 connected to the control apparatus 1000 using the cable 10' is supported by a stand, the lower end of the display apparatus 2000 may be supported at a position higher than the lower end of the control apparatus 1000 (e.g., the bottom surface). In addition, the lower end of the display apparatus 2000 may be fixed at a position higher than a lower end of the power supply apparatus 1100 (e.g., the bottom surface).

The control apparatus 1000 may be electrically connected to the display apparatus 2000 by the cable 10', for example, supplying a power from the power supply apparatus 1100 to the display apparatus 2000. In addition, the control apparatus 1000 may be functionally connected to the display apparatus 2000 by the cable 10' (e.g., transfer of contents).

The cable 10' connecting the control apparatus 1000 to the display apparatus 2000 may be an exclusive-use cable (e.g., a one-connect cable). In addition, the cable 11 connecting the control apparatus 1000 to the power supply apparatus 1100 may be an exclusive-use cable (e.g., a one-connect cable) or a plurality of cables (e.g., a power cable and an audio cable corresponding to an audio output).

When the cable 11 is provided using an exclusive-use cable, description of the cable 11 is substantially the same as the description of the one connect cable of the FIGS. 1A and FIG. 1B, and the same description will be omitted. In addition, the cable 11 is not provided using an exclusive-use cable, description of the cable 11 may be a single power cable and a single audio cable corresponding to an audio output.

Referring to FIG. 11B, a wall mount unit may be coupled to a rear surface of the display apparatus 2000. For example, the wall mount unit may be coupled to the bottom chassis 2210). Alternatively, a stand may be coupled to the bottom chassis 2210 of the display apparatus 2000. The bottom chassis 2210 may be coupled to the wall mount unit by a fastener member. In addition, the bottom chassis 2210 of the display apparatus 2000 may be coupled to the stand by a fastener member.

The cable 10' may be connected to a port disposed at a lower end of the bottom chassis 2210 of the display apparatus 2000. The cable 10' may connect a connector 2095a of a second serial transceiver (e.g., SerDes unit) 2095 provided at a lower end of the bottom chassis 2210 to a connector 1095a of a port unit 1000a provided on a rear surface of the control apparatus 1000. The cable 10' may be provided to be bent with elasticity.

Various ports may be positioned at the port unit 1000a on the rear surface of the control apparatus 1000. The port unit 1000a of the control apparatus 1000 may be positioned on any one of the left side surface and the right side surface other than on the rear surface.

The port unit 1000a of the control apparatus 1000 may include a power terminal that is connected to a one-connect port and/or a power cable connected to the connector 10a of the cable 10'.

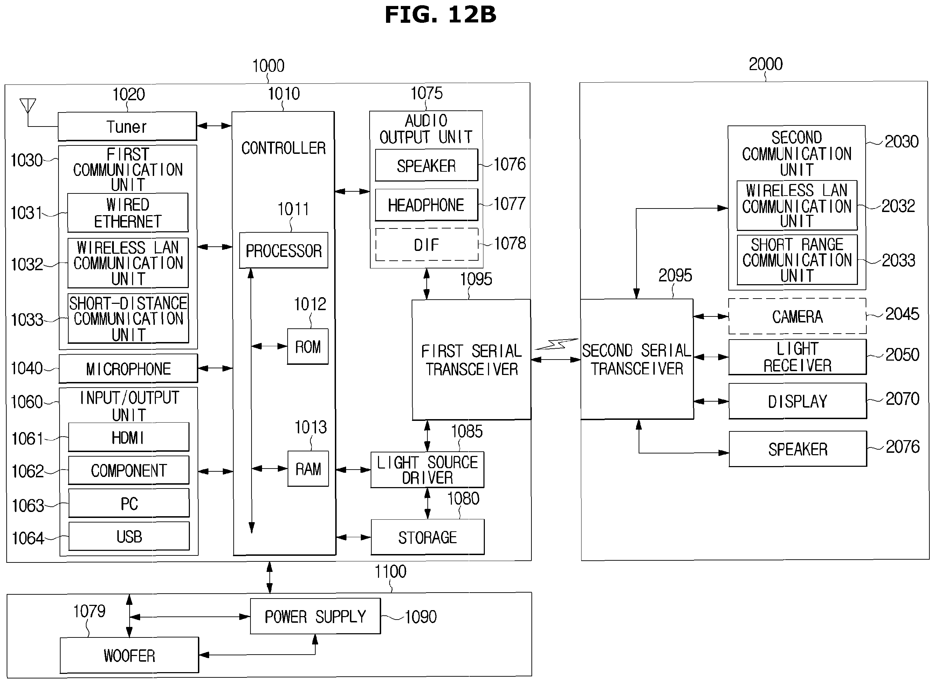

The control apparatus 1000 may be provided at a rear surface thereof with one or more High Definition Multimedia Interface (HDMI) ports 1061 (see FIG. 12B), one or more universal serial bus (USB) ports (1064 in FIG. 12B), a local area network (LAN) port corresponding to a wired Ethernet 1031, a digital audio output port, a coaxial cable connector port (e.g., a port for cable broadcasting, air channel broadcasting, or satellite broadcasting) corresponding to a tuner 1020, and/or a speaker output jack.

When the control apparatus 1000 includes a plurality of tuners, the port unit 1000a of the control apparatus 1000 may include a plurality of coaxial cable connector ports corresponding to the plurality of tuners.

It will be easily understood by those of ordinary skilled in the art that, change or omission of ports positioned on the port unit 1000a of the control apparatus 1000 according to high speed communication and/or power transmitted to the display apparatus 200 may be possible.

The control apparatus 1000 may be provided on at least one of the front surface, the rear surface, the left side surface and the right side surface thereof with a ventilating opening or a ventilating hole 1000b for ventilation. The control apparatus 1000 may be provided on at least one of the front surface, the rear surface, the left side surface and the right side surface thereof with a cooling opening or a cooling hole 1000b for heat dissipation. In addition, the control apparatus 1000 may be provided on a top surface or a bottom surface thereof with a ventilation opening or a cooling opening.

Various ports may be positioned at a port unit 1100a on a rear surface of the power supply apparatus 1100 (e.g., on a case of the power supply apparatus 1100). The port unit 100a of the power supply apparatus 1100 may be positioned on any one of the left side surface and the right side surface other than on the rear surface, except for the front surface of the power supply apparatus 1100.

The port unit 100a of the power supply apparatus 1100 may include a one connector port that is connected to a connector 10a' of the cable 10' that transmits power to the control apparatus 1000 and receives audio data from the control apparatus 1000. In addition, the port unit 100a of the power supply apparatus 1100 may include a power terminal that is connected to a power cable for supplying power to the control apparatus 1000 and/or an audio receiving port that receives an audio data from the control apparatus 1000.

The power supply apparatus 1100 may be provided at a rear surface thereof with one or more High Definition Multimedia Interface (HDMI) ports, one or more universal serial bus (USB) ports, and/or a speaker output jack.

The power supply apparatus 1100 may separately have a power terminal that is connected to an external power outlet.

It will be easily understood by those of ordinary skilled in the art that, change or omission of ports positioned on the port unit 1100a of the power supply apparatus 1100 according to power transmitted to the control apparatus 1000 and/or audio data received from the control apparatus 1000 may be possible.

The power supply apparatus 1100 may be provided on at least one of the front surface, the rear surface, the left side surface and the right side surface thereof with a ventilating opening 1100b for ventilation. The power supply apparatus 1100 may be provided on at least one of the front surface, the rear surface, the left side surface and the right side surface thereof with a cooling opening 1100b for heat dissipation. In addition, the power supply apparatus 1100 may be provided on a top surface or a bottom surface thereof with a ventilation opening or a cooling opening 1100b.

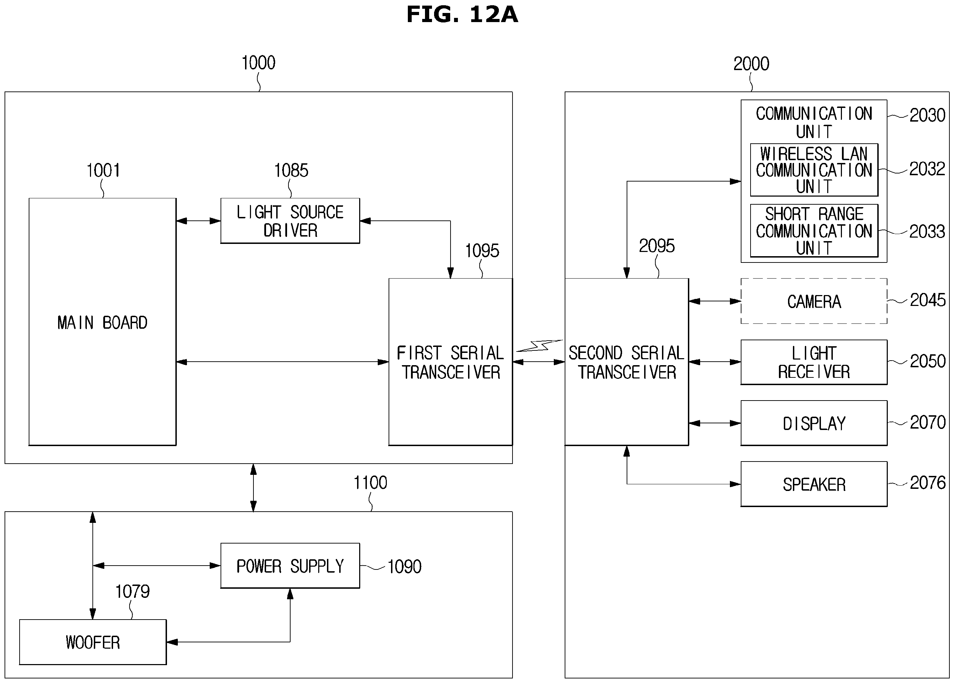

FIG. 12A is a block diagram schematically illustrating a display apparatus, a control apparatus and a power supply apparatus in accordance with another exemplary embodiment.

FIG. 12B is a block diagram illustrating a display apparatus, a control apparatus and a power supply apparatus in accordance with another exemplary embodiment.

Referring to FIG. 12A, the control apparatus 1000 for controlling the display apparatus 2000 includes a main board 1001, a light source driver 1085, and a first serial transceiver (a SerDes unit) 1095. In addition, the control apparatus 1000 may include a sensor (e.g., an illumination sensor, or a temperature sensor) to detect an inside state or an outside state of the control apparatus 1000.

The main board 1001 may include a tuner 1020, a first communication unit 1030, a microphone 1040, an input/output unit 1060, an audio output unit 1075 and/or a storage 1080.

The tuner 1020, the first communication unit 1030, the microphone 1040, the input/output unit 1060, the audio output unit 1075 and the storage 1080 that may be included in the main board 1001 will be described later with reference to FIG. 12B.

In the control apparatus 1000, the light source driver 1085 drives a light source 2220 (see FIG. 4A) of the display apparatus 200 according to control of the controller 1010. The light source driver 1085 of FIG. 12A is substantially the same as the light source driver 1085 of FIG. 2A, and the same description will be omitted.

A power supply 1090 may supply power being input from an external power source to internal components 1010 to 1095 of the control apparatus 1000 and internal components 2030 to 2095 of the display apparatus 2000 according to control of the controller 1010. The power supply 1090 of FIG. 12A is substantially the same as the power supply 190 of FIG. 2A, and the same description will be omitted.

The first serial transceiver 1095 may transmit power, control signals and/or data from the control apparatus 1000 to the second serial transceiver 2095 of the display apparatus 2000 through the cable 10' according to control of the controller 1010. The first serial transceiver 1095 of FIG. 12A is substantially the same as the first serial transceiver 195 of FIG. 2A, and the same description will be omitted.

The power supply apparatus 1100 connected to the control apparatus 1000 may include the power supply 1090. The power supply apparatus 1100 may further include a woofer 1079.

The power supply 1090 may supply power being input from an external power source to internal components 1010 to 1095 of the control apparatus 1000 and internal components 2030 to 2095 of the display apparatus 2000 according to control of the controller 110. The power supply 1090 of FIG. 12A is substantially the same as the power supply 190 of FIG. 2A, and the same description will be omitted.

The woofer 1079 of the power supply apparatus 1100 may output an audio being received from the control apparatus 1000 according to control of the control apparatus 1010. The woofer 1079 of FIG. 12A is substantially the same as the woofer 179 of FIG. 2A, and the same description will be omitted.

Referring to FIG. 12A, the display apparatus 2000 connected to the control apparatus 1000 includes a communication unit 2030, a camera 2045, a light receiver 2050, a display 2070, a speaker 2076 and a second serial transceiver 2095.

The display apparatus 2000 connected to the control apparatus 1000 includes a communication unit 2030, a camera 2045, a light receiver 2050, a display 2070, a speaker 2076, a woofer and a second serial transceiver 2095. In addition, the display apparatus 2000 may include a display 2070 and a second serial transceiver 2095.

The display apparatus 2000 may be connected to the control apparatus 1000 through the second serial transceiver 2095. The display apparatus 2000 may be connected to the first serial transceiver 1095 of the control apparatus 1000 through the second serial transceiver 2095 via wired or wireless communication.

The communication unit 2030, the camera 2045, the light receiver 2050, the display 2070 and/or the speaker 2076 of the display apparatus 2000 may receive power, a control signal and/or data from the control apparatus 100 through the second serial transceiver 2095. In addition, the communication unit 2030, the camera 2045, the light receiver 2050, the display 2070, the speaker 2076 and/or the woofer of the display apparatus 2000 may receive power, a control signal and/or data from the control apparatus 100 through the second serial transceiver 2095.

Details of the communication unit 2030, the camera 2045, the light receiver 2050, the display 2070, the speaker 2076 and/or the second serial transceiver 2095 of the display apparatus 2000 will be described later with reference to FIG. 12B.

Referring to FIG. 12B, the control apparatus 1000 for controlling the display apparatus 2000 includes the tuner 1200, the first communication unit 1030, the microphone 1040, the input/output unit 1060, the audio output unit 1075, the storage 1080, the light source driver 1085, and/or the first serial transceiver 1095.

The controller 1010 may include a processor 1011, a Read Only Memory (ROM) or non-volatile memory 1012 that stores a control program for control of the display apparatus 2000, and a Random Access Memory (RAM) or volatile memory 1013 that stores signals or data of the control apparatus 1000 or is used as a storage area corresponding to various tasks performed by the display apparatus 2000.

The controller 1010 controls an overall operation of the control apparatus 1000 and a signal flow among components 1010 to 1095 of the control apparatus 1000, and processes data of the control apparatus 1000. The controller 1010 controls an overall operation of the power supply apparatus 1100 and a signal flow among the internal components 1079 and/or 1090 of the power supply apparatus 1100, and processes data of the power supply apparatus 1100. In addition, the controller 1010 controls an overall operation of the display apparatus 2000 and a signal flow among the internal components 2030 to 2095 of the display apparatus 2000, and processes data of the display apparatus 2000.

The controller 1010 may transmit a control signal for controlling the display apparatus 2000 to the display apparatus 2000 through the first serial transceiver 1095. The controller 1010 may receive a response to the control signal for controlling the display apparatus 2000 from the display apparatus 2000 through the first serial transceiver 1095.

The controller 1010 may control power being supplied from the power supply 1090 to the internal components 1010 to 1095 of the control apparatus 1000.

The controller 1010 of FIG. 12B is substantially the same as the controller 1010 of FIG. 2B, and the same description will be omitted.

The configuration and operation of the controller 1010 may be implemented in various types according to exemplary embodiments.

The tuner 1020 may select a desired channel frequency to be received by the control apparatus 1000 among a number of electric wave components by performing frequency tuning through amplification, mixing, and resonance on broadcasting signals received via wireless or wired communication. The tuner 1020 of FIG. 12B is substantially the same as the tuner 1020 of FIG. 2B, and the same description will be omitted.

The communication unit 1030 may connect the control apparatus 1000 to an external electronic apparatus (e.g., a server or a broadcasting station) according to control of the controller 1010. The communication unit 1030 may be connected to the display apparatus 2000 according to control of the controller 1010.

The communication unit 1030 may include at least one of a wired Ethernet 131, a wireless LAN communication unit 132 and a short-distance communication unit 133 according to the performance and structure of the control apparatus 100.

The communication unit 1030 of FIG. 12B is substantially the same as the communication unit 130 of FIG. 2B, and the same description will be omitted.

The microphone 1040 receives a user's utterance speech.

The microphone 1040 of FIG. 12B is substantially the same as the microphone 140 of FIG. 2B, and the same description will be omitted.

The input/output unit 1060 receives contents from outside of the control apparatus 1000 according to control of the controller 1010. The contents may include a video, an image, a text or a web document. The input/output unit 1060 of FIG. 12B is substantially the same as the input/output unit 160 of FIG. 2B, and the same description will be omitted.

The audio output unit 1075 outputs an audio included in a broadcasting signal received through the tuner 1020 according to control of the controller 1010. The audio output unit 1075 may output an audio (e.g., speech, sound) being input through the communication unit 1030 or the input/output unit 1060. In addition, the audio output unit 1075 may output audio data stored in the storage 1080 according to control of the controller 1010.

The audio output unit 1075 may include a speaker 1076, a headphone output terminal 1077, and a digital interface format (DIF) output terminal 1078.

The audio output unit 1075 of FIG. 12B is substantially the same as the audio output unit 175 of FIG. 2B except for the woofer 179 of FIG. 2B, and the same description will be omitted.

The storage 1080 may store various data, programs or applications to drive and control the control apparatus 1000, according to control of the controller 1010. In addition, the storage 1080 may store various data, programs or applications to drive and control the display apparatus 2000 according to control of the controller 1010. The storage 1080 may store signals or data being input/output in correspondence to driving of the tuner 1020, the communication unit 1030, the microphone 1040, the input/output unit 1060, the audio output unit 1075, the light source driver 1085, the power supply 1090 and the first serial transceiver 1095.

The storage 1080 of FIG. 12B is substantially the same as the storage 180 of FIG. 2B, and the same description will be omitted.

The light source driver 1085 drives the light source 2220 of the display apparatus 2000 according to control of the controller 1010. The light source driver 1085 may perform a constant current control on the light source 2220 of the display apparatus 2000 according to control of the controller 1010.

The light source driver 1085 of FIG. 12B is substantially the same as the light source driver 185 of FIG. 2B, and the same description will be omitted.

The first serial transceiver 1095 may transmit power, control signals and/or data from the control apparatus 1000 to the second serial transceiver 2095 of the display apparatus 2000 through the cable 10' according to control of the controller 1010. In addition, the first serial transceiver 1095 may receive responses corresponding to control of the power, control signal and/or data from the second serial transceiver 2095 of the display apparatus 2000 through the cable 10' according to control of the controller 1010.

The first serial transceiver 1095 may be separately provided from the main board 1001 or integrally formed with the main board 1001.

The first serial transceiver 1095 of FIG. 12B is substantially the same as the first serial transceiver 195 of FIG. 2B, and the same description will be omitted.

At least one of the components 1010 to 1095 of the control apparatus 1000 illustrated in FIG. 12A may be added or omitted according to the performances of the control apparatus 1000 and/or the display apparatus 2000. At least one of the components 1079 to 1090 of the power supply apparatus 1100 illustrated in FIG. 12A may be added or omitted according to the performances of the control apparatus 1000 and/or the display apparatus 2000. In addition, the positions of the components 1010 to 1095 of the control apparatus 1000 may be varied according to the performances or structures of the control apparatus 1000 and/or the display apparatus 2000.

Referring to FIG. 12B, the power supply 1090 connected to the control apparatus 1000 may supply power being input from an external power source to internal components 1010 to 1095 of the control apparatus 1000 according to control of the controller 1010. The power supply 1090 may supply power being input from an external power source to internal components 1079 to 1099 of the power supply 1090 according to control of the controller 1010. In addition, the power supply 1090 may supply power being input from an external power source to internal components 2030 to 2095 of the display apparatus 2000 according to control of the controller 1010.

The power supply apparatus 1100 of FIG. 12B is substantially the same as the power supply 190 of FIG. 2B, and the same description will be omitted.

The woofer 1079 of the power supply apparatus 1100 may output an audio received from the control apparatus 1000 according to control of the controller 1010. The woofer 1079 of FIG. 12A is substantially the same as the woofer 179 of FIG. 2A, and the same description will be omitted.

Referring to FIG. 12B, the display apparatus 2000 includes the communication unit 2030, the camera 2045, the light receiver 2050, the display 2070, the speaker 2076 and the second serial transceiver 2095.

The display apparatus 2000 may include the display 2070 and the second serial transceiver 2095. In addition, the display apparatus 2000 may include the timing controller, the source driver board 296 (see FIG. 3A), the gate driver board, the display 2070 and the second serial transceiver 2095.

The communication unit 2030 may connect the display apparatus 2000 to an external apparatus (e.g., a portable apparatus, a display apparatus or a server) according to control of the controller 1010. The communication unit 2030 may be connected to the control apparatus 1000 according to control of the controller 1010. The communication unit 2030 of FIG. 12B is substantially the same as the communication unit 230 of FIG. 2B, and the same description will be omitted.

The camera 2045 receives a video (e.g., consecutive frames) corresponding to a user's motion including a gesture within a recognition range of the camera 2045. The camera 2045 of FIG. 12B is substantially the same as the camera 245 of FIG. 2B, and the same description will be omitted.

The light receiver 2050 receives an infrared signal (including control information), which is output from the remote control apparatus, through a light window.

The display 2070 of the display apparatus 2000 displays a video included in broadcasting signals being received through the tuner 1020 according to control of the controller 1010.

The received video may be received through the first serial transceiver 1095, the cable 10' and the second serial transceiver 2095 and displayed on the display 2070 according to control of the controller 1010.

The display 2070 of the display apparatus 2000 may receive a video (e.g., a moving image) being input through the communication units 1030 and 2030 or the input/output unit 1060 from the control apparatus 1000 and display the received video according to control of the controller 1010. The display 2070 may receive a video data stored in the storage 1080 from the control apparatus 1000 and output the received video data according to control of the controller 1010.

The display 2070 of FIG. 12B is substantially the same as the display 270 of FIG. 2B, and the same description will be omitted.

The speaker 2076 outputs an audio included in the broadcasting signals received through the tuner 1020 according to control of the controller 1010 of the control apparatus 100. The audio included in the broadcasting signals received through the tuner 1020 may be received by the display apparatus 2000 through the first serial transceiver 195, the cable 10' and the second serial transceiver 2095 according to control of the controller 1010, and output through the speaker 2076.

The speaker 2076 of the display apparatus 2000 may receive an audio (e.g., voice, sound) being input through the communication units 1030 and 2030 or the input/output unit 1060 from the control apparatus 1000, and output the received audio.

The speaker 2076 may receive an audio from the control apparatus 1000, the audio stored in the storage 1080, and may output the received audio according to control of the controller 1010 of the control apparatus 1000.

The speaker 2076 of FIG. 12B is substantially the same as the speaker 276 of FIG. 2B, and the same description will be omitted.

The second serial transceiver 2095 may receive power, control signals and/or data from the first serial transceiver 1095 of the control apparatus 1000 according to control of the controller 1010 of the control apparatus 1000.

The second serial transceiver 2095 may be integrally formed with or separately formed from the timing controller. In addition, the second serial transceiver 2095 may convert a serial data transmitted at a high speed from the first serial transceiver 1095 to a parallel data again.

The second serial transceiver 2095 of FIG. 12B is substantially the same as the second serial transceiver 295 of FIG. 2B, and the same description will be omitted.

At least one of the components 2030 to 2095 of the display apparatus 2000 illustrated in FIGS. 12A and 12B may be added or omitted according to the performances of the control apparatus 1000, the power supply apparatus 1100 and/or the display apparatus 2000. In addition, the positions of the components 2030 to 2095 may be varied according to the performances or structures of the control apparatus 1000, the power supply apparatus 1100 and/or the display apparatus 2000.

The methods according to the exemplary embodiments may be implemented in the form of a program instruction executable through various computing devices, and recorded in a computer readable medium. The computer readable medium may be implemented in the form of a program instruction, a data file, and a data structure, or in the combination of one or more of these. Examples of the computer readable medium may be stored in volatile storage devices or non-volatile storage devices, such as Read-Only Memories (ROMs); memories, such as random access memories (RAMs), memory chips, devices or integrated circuits; or storage media that can perform recording in an optical manner or magnetic manner and perform a read using a machine (e.g., a computer), such as compact-disc read-only memories (CD-ROMs), and digital versatile discs (DVDs), magnetic discs and magnetic tapes.

A memory being able to be included in a mobile terminal may be an example of or a storage media readable by a machine suitable for storing a program or programs including instructions that implement the exemplary embodiments.

The foregoing exemplary embodiments are merely exemplary and are not to be construed as limiting. The present teaching can be readily applied to other types of apparatuses. Also, the description of the exemplary embodiments is intended to be illustrative, and not to limit the scope of the invention as defined by the claims.

## Claims

1. A control apparatus connectable to a display apparatus, the control apparatus comprising:
a main board configured to generate a first control signal that controls the display apparatus;
a light source driver configured to generate a second control signal that drives a light source of the display apparatus;
a power supply configured to supply power to the display apparatus; and
a serial transceiver configured to perform a serial communication with the display apparatus and transmit the first control signal, the second control signal, and the power to the display apparatus via the serial communication.

2. The control apparatus of claim 1, further comprising a speaker configured to output an audio signal.

3. The control apparatus of claim 1 or 2, wherein the serial transceiver is further configured to convert parallel data of the control apparatus into serial data and transmit the converted serial data to the display apparatus.

4. The control apparatus of claim 1, 2 or 3, further comprising a woofer configured to output an audio signal.

5. The control apparatus of claim 4, wherein distances between each of the main board, the light source driver, the power supply and the woofer are different from each other.

6. The control apparatus of claim 4 or 5, wherein the control apparatus has the shape of a hexahedron, a cylinder, a sphere or a polyprism.

7. The control apparatus of claim 4, 5 or 6, wherein the woofer is exposed outside the control apparatus.

8. The control apparatus of claim 6, wherein positions of the main board, the light source driver unit, the power supply unit, and the woofer are subject to change according to the shape of the control apparatus.

9. The control apparatus of any one of claims 4 to 7, wherein the power supply is disposed between the main board and the light source driver, and a distance between the power supply and the main board has a greatest distance among distances between each of the main board, the light source driver, the power supply and the woofer.

10. The control apparatus of any one of the preceding claims, further comprising a port configured to receive a broadcasting signal and contents, and disposed on a rear surface of the control apparatus to be exposed outside the control apparatus.

11. The control apparatus of any one of the preceding claims, wherein the control apparatus is provided separately from the display apparatus.

12. The control apparatus of claim 11, wherein the control apparatus is connected to the display apparatus by a single cable.

13. The control apparatus of any one of the preceding claims, wherein the main board, the light source driver, the power supply and the serial transceiver are accommodated in a single case of the control apparatus.
